# EUROPÄISCHE PATENTSCHRIFT

(11) **EP 3 183 610 B1**
(45) Veröffentlichungstag und Bekanntmachung des Hinweises auf die Patenterteilung: **03.03.2021**
(21) Anmeldenummer: 14757877.7
(22) Anmeldetag: 20.08.2014
(51) Int. Cl.: G02B 17/00, H01S 3/00, G02B 17/02, G01N 21/03, H01S 3/223, H01S 3/23, H05G 2/00, G01N 21/39

(54) **VERFAHREN ZUM VERLÄNGERN EINES LAUFWEGS EINES LICHTSTRAHLS, OPTISCHE VERZÖGERUNGSEINRICHTUNG UND TREIBERLASERANORDNUNG DAMIT**
METHOD FOR ELONGATING A TRAVEL PATH OF A LIGHT BEAM, OPTICAL DELAY DEVICE, AND DRIVER LASER ARRANGEMENT COMPRISING SAID DEVICE
PROCÉDÉ D'EXTENSION DU TRAJET D'UN FAISCEAU DE LUMIÈRE, DISPOSITIF DE RETARD OPTIQUE ET ENSEMBLE LASER D'ATTAQUE

(43) Veröffentlichungstag der Anmeldung: 28.06.2017
(73) Patentinhaber: TRUMPF Lasersystems for Semiconductor Manufacturing GmbH, 71254 Ditzingen (DE)
(72) Erfinder: SCHULZ, Joachim, 70839 Gerlingen (DE)
(74) Vertreter: Kohler Schmid Möbus Patentanwälte
(86) Internationale Anmeldenummer: PCT/EP2014/067719
(87) Internationale Veröffentlichungsnummer: WO 2016/026523

(56) Entgegenhaltungen:
- WO-A1-00/75631
- DE-A1-102010 000 032
- JP-A- 2006 337 861
- US-A1- 2007 001 131
- US-A1- 2012 170 112

## Beschreibung

Die vorliegende Erfindung betrifft ein Verfahren zum Verlängern eines Strahlwegs eines Lichtstrahls, insbesondere eines Laserstrahls, umfassend: Einkoppeln des Lichtstrahls in einen Zwischenraum zwischen einer Mehrzahl von ersten reflektierenden Oberflächen und einer Mehrzahl von den ersten reflektierenden Oberflächen zugewandten zweiten reflektierenden Oberflächen, mehrfaches Reflektieren des Lichtstrahls zwischen den ersten reflektierenden Oberflächen und den zweiten reflektierenden Oberflächen zum Verlängern des Strahlwegs des Lichtstrahls, sowie Auskoppeln des Lichtstrahls aus dem Zwischenraum. Die Erfindung betrifft auch eine optische Verzögerungseinrichtung zum Verlängern eines Strahlwegs eines Lichtstrahls, insbesondere eines Laserstrahls, umfassend: eine Mehrzahl von ersten reflektierenden Oberflächen, eine Mehrzahl von zweiten reflektierenden Oberflächen, die den ersten reflektierenden Oberflächen zugewandt sind, einen ersten Eingang zum Einkoppeln des Lichtstrahls in einen zwischen den ersten und zweiten reflektierenden Oberflächen gebildeten Zwischenraum, sowie einen ersten Ausgang zum Auskoppeln des Lichtstrahls aus dem Zwischenraum nach dem Verlängern des Strahlwegs des Lichtstrahls durch mehrfache Reflexion an den ersten reflektierenden Oberflächen und an den zweiten reflektierenden Oberflächen. Die Erfindung betrifft auch eine Treiberlaseranordnung für eine EUV-Lichtquelle mit mindestens einer solchen optischen Verzögerungseinrichtung.

Aus der WO 2012/091786 A1 ist eine optische Verzögerungseinrichtung der eingangs genannten Art bekannt geworden. Die Verzögerungseinrichtung weist genau einen Eingang zum Einkoppeln des Lichtstrahls in den Zwischenraum sowie genau einen Ausgang zum Auskoppeln des Lichtstrahls aus dem Zwischenraum auf. Die erste und zweite Mehrzahl von reflektierenden Oberflächen sind relativ zueinander derart angeordnet und ausgerichtet, dass beim Durchlaufen des Zwischenraums zwischen dem Eingang und dem Ausgang eine Überlagerung von zwei oder mehr optischen Strahlen an jeder der optischen Oberflächen vermieden wird.

Eine solche optische Verzögerungseinrichtung kann beispielsweise in einer Treiberlaseranordnung für eine EUV-Lichtquelle verwendet werden, wie sie in der US 2009/0095925 A1 beschrieben ist. Die dort beschriebene Treiberlaseranordnung weist eine Strahlquelle zur Erzeugung von gepulster Laserstrahlung und einen oder mehrere optische Verstärker zur Verstärkung der gepulsten Laserstrahlung auf. Die Strahlquelle der Treiberlaseranordnung dient zur Erzeugung von so genannten Seed-Pulsen, die in dem bzw. in den optischen Verstärkern auf hohe Laserleistungen von mehreren kW, ggf. von 10 kW oder darüber verstärkt werden. Die von der Treiberlaseranordnung verstärkte Laserstrahlung wird über eine Strahlführungseinrichtung einer Fokussiereinrichtung zugeführt, welche die Laserstrahlung bzw. den Laserstrahl in einem Zielbereich fokussiert. In dem Zielbereich wird ein Target-Material bereitgestellt, welches bei der Bestrahlung mit dem Laserstrahl in einen Plasma-Zustand übergeht und hierbei EUV-Strahlung emittiert.

Bei der oben beschriebenen Treiberlaseranordnung kann eine Reflexion der verstärkten Laserstrahlung beispielsweise an dem Target-Material erfolgen, das z.B. in Form von Zinn-Tröpfchen vorliegen kann. Der an einem solchen Tröpfchen erzeugte Rückreflex läuft in den bzw. in die optischen Verstärker zurück und durchläuft das dort vorhandene Verstärkungsmedium, so dass auch der Rückreflex in dem bzw. in den optischen Verstärkern verstärkt wird. Auch ein schwacher Rückreflex ist ggf. ausreichend, um nach der Verstärkung in dem Verstärkungsmedium des optischen Verstärkers eine Leistung zu erzeugen, die optische oder ggf. mechanische Komponenten in dem optischen Verstärker oder im Strahlengang vor dem optischen Verstärker, z.B. in der Strahlquelle, beschädigen kann.

Um den Eintritt des reflektierten, zurücklaufenden Pulses in die Strahlquelle zu verhindern, kann beispielsweise zwischen der Strahlquelle und einem der optischen Verstärker ein optischer Schalter bzw. eine schaltbare Blende angeordnet werden, die den Strahlweg des Laserstrahls verschließt, so dass der zurücklaufende Laserpuls gesperrt wird und nicht in die Strahlquelle eintreten kann. Auch kann es günstig sein, zwischen zwei aufeinander folgenden, in Richtung auf das Target-Material propagierenden Pulsen den Strahlweg des Laserstrahls zu verschließen, damit sich keine stabile optische Achse aufbauen kann, an der sich ASE ("amplified spontaneous emission") oder parasitäres Self-Lasing (an Streustellen) ausbilden kann.

Da optische Schalter eine gewisse Zeitspanne benötigen, um nach dem Durchlauf eines Pulses den Strahlweg für den Laserstrahl zu blockieren, ist es günstig, im Strahlweg nach oder ggf. vor einem optischen Schalter eine optische Verzögerungseinrichtung vorzusehen, die den Strahlweg des Laserstrahls verlängert und somit die Laufzeit des Laserstrahls erhöht. In einer optischen Verzögerungseinrichtung wird der Strahlweg ggf. um mehr als 100 m verlängert, was durch eine enge Faltung bzw. durch eine Vielzahl von Reflexionen zwischen den reflektierenden Oberflächen realisiert werden kann. Um eine ausreichende Verlängerung des Strahlwegs sicherzustellen, benötigen optische Verzögerungseinrichtungen typischer Weise einen vergleichsweise großen Bauraum.

Aus der DE 10 2010 000 032 A1 ist ein Laserstrahlverstärker mit einem optischen System zum Ausbilden eines Strahlengangs zwischen einem ersten Punkt, in welchem der Laserstrahl einfällt, und einem zweiten Punkt, von welchem der Laserstrahl ausgegeben wird, bekannt geworden. Im Strahlengang zwischen dem ersten Punkt und dem zweiten Punkt liegt eine Verstärkungsregion. Der erste Punkt und der zweite Punkt sind konjugiert zueinander und der in dem ersten Punkt einfallende Laserstrahl wird während eines mindestens zweimaligen Durchgangs durch die Verstärkungsregion verstärkt und zum zweiten Punkt transferiert.

Aus der WO 00/75631 A1 ist eine Vorrichtung zum Definieren eines Strahlwegs für elektromagnetische Strahlung bekannt geworden. Die Vorrichtung weist zwei plane Hauptspiegel und vier oder zwei plane Hilfsspiegel auf. Die Hilfsspiegel dienen dazu, einen optischen Strahl mehrfach umzulenken, um diesen in einem Durchlauf in einem verlängerten Mehrfach-Reflexions-Strahlweg durch einen Probenbereich zwischen den Spiegeln zu führen.

JP 2006 337861 A beschreibt eine variable optische Verzögerungsvorrichtung, die zwei Raster von Spiegeln mit variablem Reflexions-Winkel aufweist. Ein durch einen Eintritts-Port eintretendes Lichtsignal wird sukzessive an dem ersten Raster und an dem zweiten Raster reflektiert und tritt an einem Austritts-Port aus. Die Anzahl der Hin-und-Herbewegungen des Lichtsignals zwischen dem ersten Raster und dem zweiten Raster und somit die Verzögerung wird durch eine Winkelsteuerung der jeweiligen Spiegel eingestellt.

### Aufgabe der Erfindung

Der Erfindung liegt die Aufgabe zugrunde, ein Verfahren zum Verlängern des Strahlwegs eines Lichtstrahls, eine optische Verzögerungseinrichtung und eine Treiberlaseranordnung für eine EUV-Lichtquelle bereitzustellen, welche eine vergleichsweise große Verlängerung des Strahlwegs bei einem vergleichsweise geringen benötigten Bauraum ermöglicht.

### Gegenstand der Erfindung

Diese Aufgabe wird gelöst durch ein Verfahren der eingangs genannten Art, bei dem der Lichtstrahl die Schritte des Einkoppelns, des mehrmaligen Reflektierens und des Auskoppelns mindestens ein erstes und ein zweites Mal durchläuft, wobei der Lichtstrahl beim ersten Durchlauf einen anderen Strahlweg in dem Zwischenraum zurücklegt als beim zweiten Durchlauf.

Erfindungsgemäß wird vorgeschlagen, dass die optische Verzögerungseinrichtung von dem Lichtstrahl mindestens zwei Mal entlang von unterschiedlichen Strahlwegen durchlaufen wird. Im Sinne dieser Anmeldung wird unter unterschiedlichen Strahlwegen nicht die Invertierung der Strahlrichtung verstanden, d.h. der Lichtstrahl durchläuft den Zwischenraum bei den mindestens zwei Durchläufen auf mindestens zwei unterschiedlichen geometrischen Strahlwegen und nicht entlang ein- und desselben Strahlwegs (in umgekehrter Richtung), wie dies z.B. bei einer Polarisationstrennung der Fall wäre.

Der mindestens zweimalige Durchlauf des Lichtstrahls durch den Zwischenraum ermöglicht es, zwischen dem ersten Durchlauf und dem zweiten Durchlauf den Lichtstrahl in seinen Eigenschaften zu verändern, beispielsweise den Lichtstrahl zu verstärken oder andere Eigenschaften (z.B. Polarisation, Divergenz, Wellenlänge, ...) des Lichtstrahls zu manipulieren. Auch kann der Lichtstrahl zwischen den beiden Durchläufen z.B. eine optische Diode durchlaufen oder ggf. durch aktive optische Elemente, z.B. durch akustooptische Modulatoren, AOM, elektrooptische Modulatoren, EOM, Verstärker oder passive optische Elemente wie Strahl-Teleskope, optische Dioden, Aperturen etc. verändert werden, beispielsweise indem der Laserstrahl abgeschnitten, insbesondere randseitig beschnitten wird. Es versteht sich, dass der Lichtstrahl zwischen dem ersten und dem zweiten Durchlauf nicht zwingend verändert werden muss, vielmehr kann der Lichtstrahl nach dem ersten Durchlauf lediglich von einem Ausgang der Verzögerungseinrichtung zu einem Eingang der Verzögerungseinrichtung umgelenkt werden, um diese erneut zu durchlaufen.

Es ist möglich, die ersten und zweiten reflektierenden Oberflächen in Form von Einzelspiegeln auszubilden, die typischer Weise an einer gemeinsamen Trägerstruktur angebracht sind. Es ist aber vorteilhaft, die reflektierenden Oberflächen in Form von Spiegel-Facetten eines Facettenspiegels auszubilden, die typischer Weise an einer Trägerstruktur in Form eines gemeinsamen Substrats angeordnet bzw. gebildet sind. Die reflektierenden Oberflächen können an einer planen Oberfläche der Trägerstruktur ausgebildet sein, es ist aber auch möglich, dass die Oberfläche der Trägerstruktur, an der die reflektierenden Oberflächen gebildet sind, eine z.B. konkave Krümmung aufweist.

Eine Gruppe von ersten und zweiten reflektierenden Oberflächen, deren Anzahl bei mehr als 50 %, bevorzugt bei mehr als 80 % der Gesamtzahl der reflektierenden ersten und zweiten Oberflächen liegt, kann dieselbe Ausrichtung aufweisen, d.h. die Normalen-Richtungen dieser Gruppe der ersten und zweiten reflektierenden Oberflächen stimmen überein. Die ersten reflektierenden Oberflächen und die zweiten reflektierenden Oberflächen dieser Gruppe können insbesondere entlang von zwei parallelen Ebenen angeordnet sein, die senkrecht zu den jeweils identischen Normalen-Richtungen verlaufen. Die ersten und zweiten reflektierenden Oberflächen können eine typischer Weise konkave oder ggf. konvexe (typischer Weise sphärische) Krümmung aufweisen. Die Normalen-Richtungen verlaufen in diesem Fall durch Mittelpunkte bzw. die Scheitel der reflektierenden Oberflächen.

Bei einer Variante wird der Lichtstrahl an mindestens einer der ersten oder der zweiten reflektierenden Oberflächen sowohl beim ersten Durchlauf als auch beim zweiten Durchlauf reflektiert. In diesem Fall wird eine, typischer Weise werden mehrere der ersten bzw. zweiten reflektierenden Oberflächen doppelt, d.h. sowohl beim ersten als auch beim zweiten Durchlauf, von dem Lichtstrahl durchlaufen, d.h. dieser wird an den jeweiligen Oberflächen reflektiert. Mit Hilfe von doppelt von dem Lichtstrahl durchlaufenen reflektierenden Oberflächen kann die zur Verlängerung des Strahlwegs benötigte Anzahl an reflektierenden Oberflächen reduziert und somit Bauraum eingespart werden.

Alternativ ist es auch möglich, dass sich die ersten und zweiten reflektierenden Oberflächen, die beim ersten Durchgang vom Strahlweg des Lichtstrahls in der optischen Verzögerungseinrichtung durchlaufen werden, von den ersten und zweiten reflektierenden Oberflächen unterscheiden, die beim zweiten Durchgang vom Strahlweg des Lichtstrahls durchlaufen werden, d.h. in diesem Fall wird keine der reflektierenden Oberflächen von dem Lichtstrahl doppelt durchlaufen. Auch in diesem Fall kann eine Verzögerungseinrichtung realisiert werden, die durch den doppelten Durchlauf nur einen geringfügig größeren Bauraum einnimmt, aber dennoch eine erhebliche Verlängerung des Strahlwegs ermöglicht. In beiden Fällen fällt auch bei einem doppelten Durchlauf der Aufwand für die Halterungs- und Justage-Mechanik nur ein einziges Mal an, so dass sich die Verzögerungseinrichtung kompakter realisieren lässt, als dies bei zwei getrennten Verzögerungseinrichtungen der Fall wäre.

Bei einer weiteren Variante wird mindestens eine der reflektierenden ersten Oberflächen bei der Reflexion des Lichtstrahls an einer der reflektierenden zweiten Oberflächen auf eine weitere reflektierende erste Oberfläche abgebildet (und umgekehrt). Durch eine mehrfache Abbildung des Lichtstrahls auf sich selbst kann vermieden werden, dass sich der Durchmesser des Lichtstrahls innerhalb des Zwischenraums bzw. innerhalb der Verzögerungseinrichtung erhöht. Zum Zwecke der Abbildung können die ersten reflektierenden Oberflächen konkav gekrümmt sein. Die zweiten reflektierenden Oberflächen können ebenfalls konkav oder ggf. konvex gekrümmt sein. Für Details hinsichtlich der Krümmung der reflektierenden Oberflächen zur Realisierung einer Mehrfach-Abbildung sei auf die eingangs zitierte WO 2012/091786 A1 verwiesen.

Bei einer vorteilhaften Variante sind die Mehrzahl von ersten reflektierenden Oberflächen und die Mehrzahl von zweiten reflektierenden Oberflächen in einem ersten Raster und in einem zweiten Raster angeordnet, die von dem Lichtstrahl bevorzugt mäanderförmig durchlaufen werden. Die beiden Raster bilden jeweils eine regelmäßige Anordnung von reflektierenden Oberflächen, die entlang des Rasters bzw. Gitternetzes angeordnet sind, d.h. die Mittelpunkte der einzelnen reflektierenden Oberflächen sind in gleichen Abständen voneinander angeordnet. Es versteht sich, dass ein solches Raster nicht durchgehend sein muss; vielmehr können insbesondere am Rand des Rasters einzelne reflektierende Oberflächen weggelassen werden. Beispielsweise können bei einer quadratischen Umfangsgeometrie der reflektierenden Oberflächen die Mittelpunkte der Oberflächen ein quadratisches Raster bilden, bei denen ein jeweiliger Mittelpunkt denselben Abstand zu vier in einer jeweils benachbarten Zeile bzw. Spalte angeordneten Mittelpunkten aufweist. Bei ersten und zweiten reflektierenden Oberflächen mit einer hexagonalen Umfangsgeometrie sind die reflektierenden Oberflächen typischer Weise in einem hexagonalen Raster angeordnet. Die Geometrie des Rasters kann wie oben beschrieben von der Umfangsgeometrie der ersten und zweiten reflektierenden Oberflächen abhängen, dies ist aber nicht zwingend der Fall. So kann beispielsweise auch bei einer (annähernd) rechteckigen Umfangsgeometrie der einzelnen reflektierenden Oberflächen eine Anordnung der reflektierenden Oberflächen in einem hexagonalen Raster sinnvoll sein.

Das Raster wird von dem Lichtstrahl bevorzugt mäanderförmig durchlaufen, d.h. die reflektierenden Oberflächen werden entlang einer vorgegebenen Richtung durchlaufen, die bei einem Durchlauf des Lichtstrahls beibehalten wird. Lediglich am Rand des Rasters wird der Lichtstrahl aus der vorgegebenen Richtung heraus umgelenkt, um das Raster seitlich versetzt entlang der vorgegebenen Richtung (mit invertierter Strahlrichtung) erneut zu durchlaufen. Der mäanderförmige Durchlauf ermöglicht es, dass der Lichtstrahl bei einem Durchlauf möglichst viele, im Idealfall alle der ersten und zweiten reflektierenden Oberflächen durchläuft.

Um den Durchlauf des Lichtstrahls entlang des ersten und zweiten Rasters zu vereinfachen, hat es sich als günstig erwiesen, wenn das erste und das zweite Raster und somit die Mittelpunkte der ersten und zweiten reflektierenden Oberflächen in einer Richtung senkrecht zu den gemeinsamen Normalen-Richtungen (s.o.) zueinander versetzt angeordnet sind. Der Versatz zwischen den beiden Rastern beträgt typischer Weise einen ganzzahligen Bruchteil, in der Regel die Hälfte, des Abstandes zwischen benachbarten Mittelpunkten der reflektierenden Oberflächen. Die Richtung, entlang derer der Versatz erfolgt, verläuft in der Regel entlang einer Zeile oder einer Spalte eines jeweiligen Rasters.

Bei einer Weiterbildung unterscheidet sich eine Richtung, entlang derer der Lichtstrahl die ersten und zweiten reflektierenden Oberflächen des ersten und zweiten Rasters bei dem ersten Durchlauf mäanderförmig durchläuft, sich von einer Richtung, entlang derer der Lichtstrahl die ersten und zweiten reflektierenden Oberflächen des ersten und zweiten Rasters bei dem zweiten Durchlauf mäanderförmig durchläuft. Die Richtungen, entlang derer die mindestens zwei mäanderförmigen Durchläufe erfolgen, sind zueinander verdreht und können beispielsweise einen Winkel von 90° oder von 60° zueinander einschließen. Durch den verdrehten mäanderförmigen Durchlauf ist es insbesondere möglich, die Mehrzahl der ersten und zweiten reflektierenden Oberflächen parallel bzw. mit gleicher Normalen-Richtung zueinander auszurichten und dennoch einen mehrfachen Durchlauf zu ermöglichen, bei dem die Strahlwege nicht übereinstimmen.

Bei einer Variante wird bei dem ersten Durchlauf der Lichtstrahl von einer der ersten reflektierenden Oberflächen zu einer der zweiten reflektierenden Oberflächen und von dieser zurück zu einer weiteren, benachbarten ersten reflektierenden Oberfläche reflektiert, und bei dem zweiten Durchlauf wird der Lichtstrahl von einer der ersten reflektierenden Oberflächen zu derselben zweiten reflektierenden Oberfläche und von dieser zurück zu einer weiteren, nicht benachbarten ersten reflektierenden Oberfläche reflektiert. Es versteht sich, dass der zweite Durchlauf nicht zwingend zeitlich auf den ersten Durchlauf folgen muss, d.h. die zeitliche Reihenfolge des ersten und zweiten Durchlaufs ist beliebig. Bei dem ersten Durchlauf werden die ersten und zweiten reflektierenden Oberflächen eines Rasters typischer Weise zeilen- oder spaltenweise (insbesondere mäanderförmig) durchlaufen, d.h. die Reflexionen erfolgen zwischen benachbarten reflektierenden optischen Oberflächen (mit minimalem Abstand zwischen den (Flächen-)Mittelpunkten). Beim zweiten Durchlauf erfolgen die Reflexionen dagegen typischer Weise zwischen nicht benachbarten ersten und zweiten reflektierenden Oberflächen, d.h. die ersten und zweiten reflektierenden Oberflächen werden typischer Weise unter einem Winkel zu den Zeilen oder Spalten des Rasters durchlaufen, entlang derer die reflektierenden Oberflächen einen minimalen Abstand zueinander aufweisen.

Die benachbarten ersten reflektierenden Oberflächen können insbesondere in derselben Zeile (oder Spalte) des ersten Rasters wie die zweite reflektierende Oberfläche des zweiten Rasters angeordnet sein. Die nicht benachbarten ersten Oberflächen des ersten Rasters können in zwei Zeilen (oder Spalten) des ersten Rasters angeordnet sein, die zur Zeile (oder Spalte) des zweiten Rasters mit der zweiten reflektierenden Oberfläche benachbart angeordnet sind und die beispielsweise direkt über bzw. direkt unter der Zeile des zweiten Rasters liegen, in der die zweite reflektierende Oberfläche angeordnet ist.

Insbesondere kann bei einem dritten Durchlauf der Lichtstrahl von einer der ersten reflektierenden Oberflächen zu derselben zweiten reflektierenden Oberfläche und von dieser zurück zu einer nicht benachbarten ersten reflektierenden Oberfläche reflektiert werden, wobei die erste reflektierende Oberfläche und die weitere erste reflektierende Oberfläche bei dem dritten Durchlauf nicht mit der ersten reflektierenden Oberfläche und der weiteren ersten reflektierenden Oberfläche bei dem zweiten Durchlauf übereinstimmen. In diesem Fall werden die reflektierenden Oberflächen bei dem dritten Durchlauf entlang einer anderen Richtung durchlaufen als beim zweiten Durchlauf. Auf diese Weise kann ein dreifacher Durchlauf des Lichtstrahls durch die optische Verzögerungseinrichtung mit drei jeweils unterschiedlichen Strahlwegen realisiert werden.

Die Erfindung betrifft auch eine optische Verzögerungseinrichtung der eingangs genannten Art, welche einen zweiten, vom ersten verschiedenen Eingang und einen zweiten, vom ersten verschiedenen Ausgang aufweist, und welche ausgebildet ist, den Lichtstrahl zwischen dem ersten Eingang und dem ersten Ausgang auf einem ersten (geometrischen) Strahlweg und den Lichtstrahl zwischen dem zweiten Eingang und dem zweiten Ausgang auf einem zweiten, vom ersten verschiedenen (geometrischen) Strahlweg durch den Zwischenraum zwischen den ersten und zweiten reflektierenden Oberflächen zu führen, wobei die optische Verzögerungseinrichtung ausgebildet ist, den Lichtstrahl nach dem Durchlaufen des Zwischenraums auf dem ersten Strahlweg vom ersten Ausgang zum zweiten Eingang umzulenken, um den Zwischenraum auf dem zweiten Strahlweg erneut zu durchlaufen. Wie weiter oben beschrieben wurde, kann durch die Realisierung von zwei oder mehr geometrischen Strahlwegen der für die Verlängerung des Strahlwegs benötigte Bauraum der optischen Verzögerungseinrichtung reduziert werden.

Bei einer vorteilhaften Ausführungsform weist eine Gruppe von ersten und zweiten reflektierenden Oberflächen, deren Anzahl bei mehr als 50 %, bevorzugt bei mehr als 80 % der Gesamtzahl der reflektierenden ersten und zweiten Oberflächen liegt, eine identische Normalen-Richtung auf, d.h. die ersten und zweiten reflektierenden Oberflächen dieser Gruppe sind parallel zueinander ausgerichtet. Der Lichtstrahl kann zwischen den parallel ausgerichteten ersten und zweiten reflektierenden Oberflächen der Gruppe unter jeweils gleichem Einfalls- und Ausfallswinkel hin- und her reflektiert werden. Die identische Ausrichtung der ersten und zweiten reflektierenden Oberflächen vereinfacht deren Herstellung, insbesondere wenn diese als Facetten auf einem gemeinsamen Substrat gefertigt werden.

Bevorzugt sind die Mehrzahl von ersten reflektierenden Oberflächen und die Mehrzahl von zweiten reflektierenden Oberflächen in einem ersten Raster und in einem zweiten Raster angeordnet. Die Anordnung in einem Raster ist günstig, um den Lichtstrahl an mindestens eine der ersten oder der zweiten reflektierenden Oberflächen sowohl bei einem ersten und bei einem zweiten Durchlauf zu reflektieren, wie weiter oben beschrieben wurde.

Bei einer Weiterbildung sind das erste Raster und das zweite Raster parallel ausgerichtet und zueinander versetzt angeordnet, wobei der Versatz bevorzugt einen ganzzahligen Bruchteil, insbesondere die Hälfte, eines Abstandes zwischen den Mittelpunkten (bzw. den Scheitelpunkten) benachbarter reflektierender Oberflächen des ersten und des zweiten Rasters beträgt. In diesem Fall sind das erste Raster und das zweite Raster, genauer gesagt die Mittelpunkte bzw. die Scheitelpunkte der ersten und zweiten reflektierenden Oberflächen, in parallelen Ebenen angeordnet. Die beiden parallel ausgerichteten Raster, welche typischer Weise erste und zweite reflektierende Oberflächen mit gleicher Geometrie und mit gleichem Flächeninhalt aufweisen, sind um einen ganzzahligen Bruchteil des Abstandes zwischen den Mittelpunkten bzw. den Scheitelpunkten der ersten bzw. zweiten reflektierenden Oberflächen zueinander versetzt angeordnet, um die mehrfache Reflexion zwischen den ersten und zweiten reflektierenden Oberflächen zu vereinfachen. Insbesondere kann auf diese Weise die mehrfache Reflexion zwischen parallel zueinander ausgerichteten ersten und zweiten Oberflächen des ersten und zweiten Rasters vereinfacht werden, was ein mäanderförmiges Durchlaufen der reflektierenden Oberflächen des jeweiligen Rasters begünstigt. Einzelne, insbesondere am Rand des Rasters angeordnete reflektierende Oberflächen können gegenüber der Raster-Ebene bzw. gegenüber den parallel ausgerichteten ersten und zweiten reflektierenden Oberflächen verkippt ausgerichtet sein, um am Rand des Rasters eine Umlenkung des Lichtstrahls zu bewirken. Auch die Mittelpunkte dieser reflektierenden Oberflächen liegen auf dem Raster, d.h. die Mittelpunkte dieser Oberflächen werden trotz der Verkippung nicht gegenüber dem jeweiligen Raster versetzt. Die Richtung, entlang derer die beiden Raster versetzt sind, verläuft in der Regel entlang einer Zeile oder einer Spalte eines jeweiligen Rasters bzw. entlang einer Richtung, die durch die Mittelpunkte von mindestens zwei benachbarten reflektierenden Oberflächen verläuft.

Bei einer weiteren Ausführungsform ist die Verzögerungseinrichtung ausgebildet, den Lichtstrahl auf dem ersten Strahlweg über der ersten und zweiten reflektierenden Oberflächen des ersten und zweiten Rasters mäanderförmig entlang einer ersten Richtung zu führen, und welche ausgebildet ist, den Lichtstrahl auf dem zweiten Strahlweg über die ersten und zweiten reflektierenden Oberflächen des ersten und zweiten Rasters mäanderförmig entlang einer zweiten, von der ersten verschiedenen Richtung zu führen. Wie weiter oben im Zusammenhang mit dem Verfahren beschrieben wurde, kann auf diese Weise die optische Verzögerungseinrichtung besonders effektiv mehrmals durchlaufen werden. Insbesondere können die ersten und zweiten reflektierenden Oberflächen, an denen die Reflexion entlang der ersten bzw. zweiten Richtung erfolgt, parallel zueinander ausgerichtet sein. Lediglich an den Rändern des jeweiligen Rasters sind typischer Weise erste und zweite reflektierende Oberflächen vorhanden, die gegenüber den parallel ausgerichteten reflektierenden Oberflächen verkippt angeordnet sind, um eine Umlenkung des Lichtstrahls sowie einen seitlichen Versatz zu bewirken, damit dieser das Raster erneut entlang der ersten bzw. zweiten Richtung (mit umgekehrter Strahlrichtung) durchlaufen kann.

Um den Lichtstrahl unter einem geeigneten Winkel bzw. mit einer geeigneten Strahlrichtung und an einem geeigneten Ort in die optische Verzögerungseinrichtung einzukoppeln, so dass dieser sowohl den ersten Strahlengang als auch den zweiten Strahlengang durchlaufen kann, ist ggf. ein einziger Eingang und ein einziger Ausgang ausreichend. In der Regel ist es günstiger, für das Ein- und Auskoppeln in den bzw. aus dem ersten Strahlengang sowie für das Ein- und Auskoppeln in den bzw. aus dem zweiten Strahlengang jeweils separate Ein- und Ausgänge vorzusehen.

Bei einer weiteren Ausführungsform weist die Mehrzahl von ersten reflektierenden Oberflächen eine erste Gruppe von ersten reflektierenden Oberflächen und eine zweite Gruppe von ersten reflektierenden Oberflächen auf und die Mehrzahl von zweiten reflektierenden Oberflächen weist eine erste Gruppe von zweiten reflektierenden Oberflächen und eine zweite Gruppe von zweiten reflektierenden Oberflächen auf, wobei die reflektierenden ersten und zweiten Oberflächen der ersten Gruppe und die reflektierenden ersten und zweiten Oberflächen der zweiten Gruppe derart angeordnet und ausgerichtet sind, dass der Lichtstrahl entlang eines ersten Strahlwegs nur zwischen reflektierenden ersten und zweiten Oberflächen der ersten Gruppe verläuft und den Lichtstrahl entlang eines zweiten Strahlwegs nur zwischen reflektierenden ersten und zweiten Oberflächen der zweiten Gruppe verläuft. Bei dieser Ausführungsform werden die ersten und zweiten Oberflächen der jeweiligen Gruppe bei beiden Strahlwegen nur ein einziges Mal durchlaufen.

Bevorzugt sind bei dieser Ausführungsform die ersten und zweiten reflektierenden Oberflächen der ersten Gruppe in einem ersten, inneren Ringbereich und die ersten und zweiten reflektierenden Oberflächen der zweiten Gruppe in einem zweiten, äußeren Ringbereich angeordnet. Die Mittelpunkte der reflektierenden Oberflächen der ersten Gruppe und die Mittelpunkte der reflektierenden Oberflächen der zweiten Gruppe sind in diesem Fall typischer Weise entlang von zwei konzentrischen Kreisen angeordnet. Durch die Anordnung der beiden Gruppen von reflektierenden Oberflächen in zwei Ringbereichen kann trotz des Verzichts auf eine Mehrfachnutzung der reflektierenden Oberflächen eine Verlängerung des Strahlwegs mit nur geringfügig größerem Bauraum realisiert werden. Typischer Weise werden benachbarte erste und zweite reflektierende Oberflächen eines jeweiligen Ringbereichs nacheinander durchlaufen, d.h. der gesamte erste oder zweite Ringbereich wird entweder in oder entgegen dem Uhrzeigersinn durchlaufen. Der Lichtstrahl kann den ersten Ringbereich und den zweiten Ringbereich entweder gleichläufig oder gegenläufig durchlaufen. Eine ringförmige Anordnung der reflektierenden Oberflächen hat sich insbesondere bei der Verwendung der optischen Verzögerungseinrichtung in einem optischen Verstärker als vorteilhaft erwiesen. Es versteht sich, dass auch ein dritter, vierter,... Ringbereich vorgesehen werden kann, der bzw. die konzentrisch zum ersten und zweiten Ringbereich angeordnet sind.

Bei einer Weiterbildung ist zwischen der ersten Gruppe von reflektierenden ersten und zweiten Oberflächen und der zweiten Gruppe von reflektierenden ersten und zweiten Oberflächen eine Abschirmung, insbesondere in Form eines Hohlzylinders, zur Verhinderung des Übertritts von Strahlung von dem ersten Strahlweg in den zweiten Strahlweg oder umgekehrt angeordnet. Wenn für den ersten Strahlweg und den zweiten Strahlweg jeweils separate Eingänge und Ausgänge vorgesehen sind, kann die Abschirmung die beiden Strahlwege vollständig voneinander trennen bzw. abschirmen. Falls nur ein Eingang und ein Ausgang in der Verzögerungseinrichtung vorgesehen sind, ist es typischer Weise erforderlich, in der Abschirmung einen Durchlass für den Laserstrahl vorzusehen.

Bei einer weiteren Ausführungsform ist die Verzögerungseinrichtung ausgebildet, mindestens eine der reflektierenden ersten Oberflächen bei der Reflexion des Lichtstrahls an einer der reflektierenden zweiten Oberflächen auf eine weitere reflektierende erste Oberfläche abzubilden. Wie weiter oben im Zusammenhang mit dem Verfahren beschrieben wurde, ist es günstig, bei der mehrfachen Reflexion des Lichtstrahls eine Mehrfachabbildung zu realisieren, um zu verhindern, dass sich der Strahldurchmesser des Lichtstrahls bei der mehrfachen Reflexion vergrößert.

Bei einer weiteren Ausführungsform sind die ersten reflektierenden Oberflächen konkav gekrümmt. Die konkave Krümmung der reflektierenden Oberflächen ermöglicht es, eine Mehrfachabbildung zu realisieren. Auch die zweiten reflektierenden Oberflächen sind typischer Weise entweder konkav oder ggf. konvex gekrümmt, um eine Mehrfachabbildung zu realisieren.

Bei einer weiteren Ausführungsform ist die Mehrzahl von ersten reflektierenden Oberflächen an einer ersten Trägerstruktur angebracht und die Mehrzahl von zweiten reflektierenden Oberflächen ist an einer zweiten Trägerstruktur angebracht. Die Oberflächen der ersten und zweiten Trägerstrukturen, an denen die ersten und zweiten reflektierenden Oberflächen angebracht sind, sind typischer Weise als Planflächen ausgebildet, d.h. die Mittelpunkte bzw. die Scheitelpunkte der ersten und zweiten reflektierenden Oberflächen sind jeweils in einer gemeinsamen Ebene angeordnet. Die erste und zweite Trägerstruktur, genauer gesagt die einander zugewandten Oberflächen der ersten und zweiten Trägerstruktur, an denen die ersten und zweiten reflektierenden Oberflächen angebracht sind, sind typischer Weise parallel zueinander ausgerichtet.

Die ersten und zweiten reflektierenden Oberflächen können an den Trägerstrukturen in Form von Spiegel-Facetten eines Facetten-Spiegels gebildet sein, d.h. die Trägerstrukturen bilden ein Substrat, an dem die reflektierenden Oberflächen z.B. durch Diamantdrehen erzeugt werden. Die reflektierenden Oberflächen können auch als Einzelspiegel ausgebildet sein, die an der Trägerstruktur befestigt, z.B. angeschraubt sind. Zur Erhöhung der Reflektivität können die Einzelspiegel auch mit einer dielektrischen Beschichtung versehen sein, wie dies in der eingangs zitierten WO 2012/091786 A1 beschrieben ist. Der Eingang bzw. die Eingänge und der Ausgang bzw. die Ausgänge können z.B. in Form von Öffnungen an den Trägerstrukturen ausgebildet sein. Es ist aber ggf. auch möglich, den Eingang oder den Ausgang mittels eines oder mehrerer Spiegel, der in den Zwischenraum zwischen der ersten und der zweiten Trägerstruktur eingebracht werden, zu realisieren. In diesem Fall wird der Lichtstrahl auf den als Eingang dienenden Spiegel eingestrahlt und z.B. um 90° auf eine der ersten oder der zweiten reflektieren Oberflächen umgelenkt. Entsprechend kann der Lichtstrahl an einem weiteren Spiegel umgelenkt und aus dem Zwischenraum ausgekoppelt werden.

Bei einer Weiterbildung umfasst die Verzögerungseinrichtung Abstandshalter zum Verbinden der Trägerstrukturen unter Einhaltung eines vorgegebenen Abstands zueinander. Um die mehrfache Reflexion zwischen den ersten und zweiten reflektierenden Oberflächen zu ermöglichen, ist es erforderlich, dass die Trägerstrukturen, die typischer Weise parallel zueinander ausgerichtet sind, in einem vorgegebenen Abstand voneinander angeordnet sind.

Ein weiterer Aspekt der Erfindung betrifft eine Treiberlaseranordnung für eine EUV-Lichtquelle, umfassend: mindestens eine optische Verzögerungseinrichtung wie oben beschrieben. Die optische Verzögerungseinrichtung dient in diesem Fall typischer Weise zur Verlängerung des Laufwegs eines Laserstrahls, beispielsweise eines CO₂-Laserstrahls, der von einer Strahlquelle erzeugt wird. Die optische Verzögerungseinrichtung kann im Strahlweg des Laserstrahls hinter einem optischen Schalter, beispielsweise in Form eines akustooptischen Modulators, angeordnet sein, um den Laufweg des Laserstrahls zu verlängern und auf diese Weise ausreichend Zeit für das Umschalten des optischen Schalters zu erhalten, so dass ein an einem Target-Material erzeugter Rückreflex von dem optischen Schalter blockiert werden kann. In diesem Fall können die beiden Strahlwege der Verzögerungseinrichtung direkt nacheinander durchlaufen werden. Es ist aber auch möglich, dass zwischen dem Durchlaufen des ersten Strahlwegs der Verzögerungseinrichtung und dem Durchlaufen des zweiten Strahlwegs der Verzögerungseinrichtung der Laserstrahl durch eine oder mehrere optische Komponenten geführt wird, in denen die Eigenschaften des Laserstrahls verändert werden. Beispielsweise kann der Laserstrahl zwischen dem ersten Durchlauf und dem zweiten Durchlauf in einem optischen Verstärker verstärkt werden. Die optische Verzögerungseinrichtung kann auch in einem optischen Verstärker der Treiberlaseranordnung verwendet werden. In diesem Fall ist in den Zwischenraum zwischen den ersten und zweiten reflektierenden Oberflächen ein typischer Weise gasförmiges Verstärkermedium, beispielsweise in Form von CO₂-Gas, eingebracht.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1a,b: schematische Darstellungen von zwei Ausführungsbeispielen einer Treiberlaseranordnung für eine EUV-Lichtquelle, welche zwei bzw. eine optische Verzögerungseinrichtung aufweisen,
- Fig. 2: eine schematische Darstellung eines ersten Ausführungsbeispiels einer optischen Verzögerungseinrichtung, bei welcher erste und zweite reflektierende Oberflächen in einem ersten und zweiten, zum ersten versetzten Raster angeordnet sind,
- Fig. 3a,b: schematische Darstellungen eines ersten und zweiten quadratischen Rasters mit ersten und zweiten reflektierenden Oberflächen (Fig. 3a) sowie von zwei mäanderförmigen Strahlwegen entlang von zwei unterschiedlichen Richtungen an dem zweiten Raster (Fig. 3b),
- Fig. 4a,b: schematische Darstellungen der beiden übereinander angeordneten Raster von Fig. 3a mit zwei bzw. mit drei mäanderförmigen Strahlwegen entlang von zwei bzw. von drei zueinander verdrehten Richtungen,
- Fig. 5a,b: schematische Darstellungen eines ersten und zweiten hexagonalen Rasters mit ersten und zweiten reflektierenden Oberflächen (Fig. 5a) sowie von zwei mäanderförmigen Strahlwegen entlang von zwei zueinander senkrechten Richtungen an dem zweiten Raster (Fig. 5b),
- Fig. 6: schematische Darstellungen der beiden übereinander angeordneten Raster von Fig. 5a mit zwei mäanderförmigen Strahlwegen entlang von zwei zueinander senkrechten Richtungen, sowie
- Fig. 7: eine schematische Darstellung eines zweiten Ausführungsbeispiels einer optischen Verzögerungseinrichtung, bei welcher die ersten und zweiten reflektierenden Oberflächen in einem ersten, inneren Ringbereich und in einem zweiten, äußeren Ringbereich angeordnet sind.

In der folgenden Beschreibung der Zeichnungen werden für gleiche bzw. funktionsgleiche Bauteile identische Bezugszeichen verwendet.

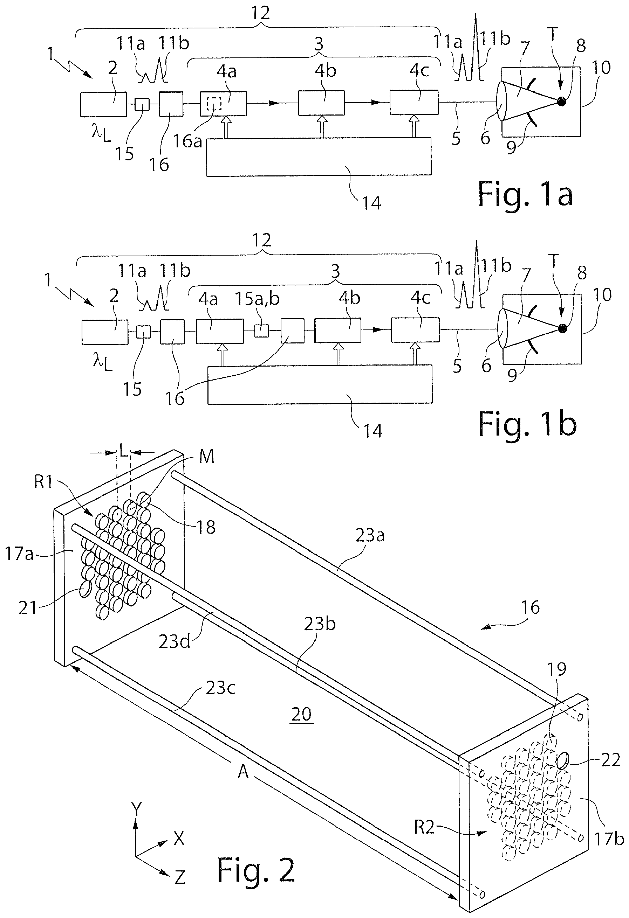

Fig. 1a zeigt stark schematisch eine EUV-Lichtquelle 1, welche eine Strahlquelle 2, eine Verstärkeranordnung 3 mit drei optischen Verstärkern 4a, 4b, 4c bzw. Verstärkerstufen, eine nicht näher dargestellte Strahlführungseinrichtung 5 sowie eine Fokussiereinrichtung in Form einer Fokussierlinse 6 aufweist. Die Fokussierlinse 6 dient dazu, einen von der Strahlquelle 2 erzeugten und von der Verstärkeranordnung 3 verstärkten gepulsten Lichtstrahl in Form eines Laserstrahls 7 an einem Zielbereich bzw. an einer Zielposition T zu fokussieren, an dem ein Target-Material 8 eingebracht ist. Das Target-Material 8 geht bei der Bestrahlung mit dem Laserstrahl 7 in einen Plasma-Zustand über und emittiert hierbei EUV-Strahlung, die mittels eines Kollektorspiegels 9 fokussiert wird.

Bei dem in Fig. 1a gezeigten Beispiel weist der Kollektorspiegel 9 eine Öffnung zum Durchtritt des Laserstrahls 7 auf und die Fokussierlinse 6 trennt eine VakuumKammer 10, in welcher das Target-Material 8 angeordnet ist, von der Strahlführungseinrichtung 5. Die Strahlquelle 2 weist im gezeigten Beispiel einen CO₂-Laser auf, um in kurzer zeitlicher Folge einen ersten Puls 11a (Vor-Puls) und einen zweiten Puls 11b (Haupt-Puls) zu erzeugen, die gemeinsam in der Verstärkeranordnung 3 verstärkt und auf das Target-Material 8 bzw. in den Bereich der Zielposition T fokussiert werden. Die Strahlquelle 2 bildet gemeinsam mit der Verstärkeranordnung 3 eine Treiberlaseranordnung 12 der EUV-Lichtquelle 1.

Die Wellenlänge λ_{L} des Laserstrahls 7, die von der Strahlquelle 2 erzeugt wird, ist konstant und liegt im gezeigten Beispiel einer Strahlquelle 2 in Form eines CO₂-Lasers bei ca. 10,6 µm. Wie in Fig. 1a anhand der Pulshöhen zu erkennen ist, werden die beiden Pulse 11a, 11b mit unterschiedlicher Leistung von der Strahlquelle 2 erzeugt und in den drei optischen Verstärkern 4a-c der Verstärkeranordnung 3 verstärkt. Um zu verhindern, dass ein an dem Target-Material 8 erzeugter Rückreflex des verstärkten Laserstrahls 7 nach dem Durchlaufen der Verstärkeranordnung 3 in umgekehrter Richtung in die Strahlquelle 2 eintritt, ist im Strahlweg des Laserstrahls 7 zwischen der Strahlquelle 2 und dem ersten Verstärker 4a der Verstärkeranordnung 3 ein akustooptischer Modulator 15 angeordnet. Der akustooptische Modulator 15 kann als optischer Schalter dienen und den Strahlweg des zur Strahlquelle 2 zurück propagierenden Laserstrahls 7 blockieren. Zu diesem Zweck ist es erforderlich, dass der akustooptische Modulator 15 innerhalb einer Umschaltzeit zwischen einer ersten Schaltstellung, in welcher der gepulste Laserstrahl 7 transmittiert wird, in eine zweite Schaltstellung umgeschaltet wird, in welcher der gepulste Laserstrahl 7 blockiert wird. Diese Umschaltzeit muss geringer sein als die Zeitspanne, die der Laserstrahl 7 von dem akustooptischen Modulator 15 zum Target-Material 8 und zurück benötigt. Um den Strahlweg des Laserstrahls 7 zu verlängern, ist im Strahlweg nach dem akustooptischen Modulator 15 bei der in Fig. 1a gezeigten EUV-Lichtquelle 1 eine optische Verzögerungseinrichtung 16 angeordnet.

In Fig. 1b ist ein weiteres Beispiel für eine EUV-Lichtquelle 1 dargestellt, die sich von der EUV-Lichtquelle 1 von Fig. 1a dadurch unterscheidet, dass zwischen dem ersten optischen Verstärker 4a und dem zweiten optischen Verstärker 4b zwei weitere akustooptische Modulatoren 15a, 15b angeordnet sind. Bei dem in Fig. 1b gezeigten Beispiel durchläuft der Laserstrahl 7 die optische Verzögerungseinrichtung 16 ein erstes Mal und ein zweites Mal, wobei der Laserstrahl 7 zwischen dem ersten und zweiten Durchlauf durch die Verzögerungseinrichtung 16 in dem ersten optischen Verstärker 4a verstärkt wird. Anders als in Fig. 1b dargestellt ist, kann der zweite Durchlauf des Laserstrahls 7 durch die optische Verzögerungseinrichtung 16 zwischen den beiden akustooptischen Modulatoren 15a, 15b erfolgen.

Fig. 2 zeigt die optische Verzögerungseinrichtung 16 von Fig. 1a,b in einer dreidimensionalen Ansicht. Die optische Verzögerungseinrichtung 16 weist zwei Trägerstrukturen 17a,b in Form von Trägerplatten auf. An der ersten Trägerstruktur 17a ist eine Mehrzahl von ersten reflektierenden Oberflächen 18 gebildet, die in einem ersten quadratischen Raster R1 angeordnet sind. Entsprechend ist an der zweiten Trägerstruktur 17b eine Mehrzahl von zweiten reflektierenden Oberflächen 19 gebildet, die in einem zweiten quadratischen Raster R2 angeordnet sind. Im gezeigten Beispiel sind die ersten und zweiten reflektierenden Oberflächen 18, 19 als Einzelspiegel mit kreisförmiger Geometrie ausgebildet, die an den planen Oberflächen der Trägerstrukturen 17a,b z.B. mit Hilfe von Schrauben oder dergleichen befestigt sind.

Zwischen den beiden Trägerstrukturen 17a,b und somit zwischen den ersten und zweiten reflektierenden Oberflächen 18, 19 ist ein Zwischenraum 20 gebildet, in den der Laserstrahl 7 an einem in der ersten Trägerstruktur 17a gebildeten Eingang 21 in Form einer Durchgangsöffnung eingekoppelt wird und über einen an der zweiten, der ersten gegenüber liegenden Trägerstruktur 17b gebildeten Ausgang 22, der ebenfalls in Form einer Durchgangsöffnung ausgebildet ist, ausgekoppelt wird. Die beiden Trägerstrukturen 17a,b sind im gezeigten Beispiel über vier parallel zueinander ausgerichtete stabförmige Abstandshalter 23a-d miteinander verbunden, um die beiden Trägerstrukturen 17a,b in einem gewünschten Abstand A voneinander zu halten.

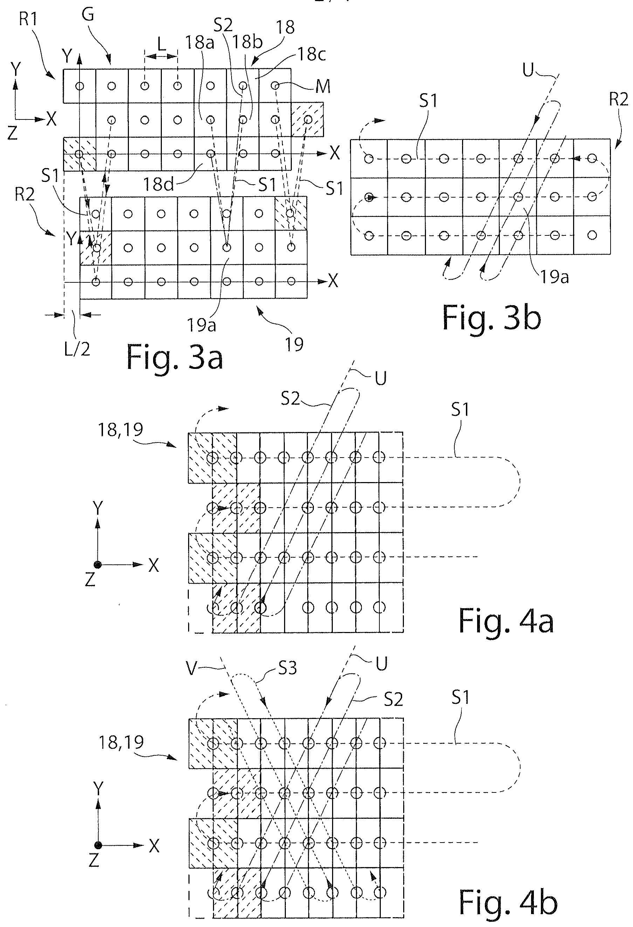

Die Mittelpunkte M von benachbarten kreisförmigen ersten und zweiten reflektierenden Oberflächen 18, 19 sind sowohl in horizontaler Richtung (X-Richtung) als auch in vertikaler Richtung (Y-Richtung) in einem Abstand L voneinander angeordnet, der dem Rasterabstand bzw. dem Gitterabstand des ersten und zweiten Rasters R1, R2 in X-Richtung bzw. in Y-Richtung entspricht. Das zweite Raster R2 ist gegenüber dem ersten Raster R1 in X-Richtung versetzt angeordnet, wobei der Versatz der Hälfte L/2 des Abstandes L zwischen benachbarten ersten und zweiten reflektierenden Oberflächen 18, 19 des ersten und zweiten Rasters R1, R2 entspricht, wie insbesondere in Fig. 3a gut zu erkennen ist, welche einen Ausschnitt aus einem ersten Raster R1 und einen Ausschnitt eines gegenüber liegenden zweiten Rasters R2 jeweils in einer Draufsicht zeigt.

Die ersten und zweiten reflektierenden Oberflächen 18, 19 des ersten und zweiten Rasters R1, R2 von Fig. 3a unterscheiden sich von den ersten und zweiten reflektierenden Oberflächen 18, 19 von Fig. 2 dadurch, dass diese eine quadratische Geometrie aufweisen und (annähernd) unmittelbar benachbart zueinander angeordnet sind. Bei den in Fig. 3a gezeigten ersten und zweiten reflektierenden Oberflächen 18, 19 handelt es sich um Spiegel-Facetten, die auf einem gemeinsamen (in Fig. 3a nicht gezeigten) Substrat gebildet sind, das auf eine Trägerstruktur 17a,b aufgebracht ist. Das Substrat kann wie eine einzige große reflektierende Oberfläche bzw. wie ein einzelner Spiegel mit einer einzigen Befestigungs/ Justagemethode, z.B. mit Hilfe von Schrauben, auf der Trägerstruktur 17a,b befestigt sein. Die Spiegel-Facetten 18, 19 können an dem Substrat, das beispielsweise aus Kupfer bestehen kann, durch eine Oberflächenbearbeitung, beispielsweise durch Diamantdrehen, erzeugt werden. Gegebenenfalls kann auf die ersten und zweiten reflektierenden Oberflächen 18, 19 eine reflexionsverstärkende Beschichtung aufgebracht werden.

Für die Herstellung der ersten und zweiten reflektierenden Oberflächen 18, 19 in Form von Spiegel-Facetten hat es sich als günstig erwiesen, wenn eine möglichst große Anzahl von ersten und zweiten reflektierenden Oberflächen 18, 19 eine identische Ausrichtung aufweisen, d.h. dieselbe Normalen-Richtung, die im gezeigten Beispiel mit der Z-Richtung übereinstimmt, entlang derer die beiden parallel ausgerichteten Raster R1, R2 bzw. die beiden Trägerstrukturen 17a,b beabstandet zueinander angeordnet sind. Bei den in Fig. 3a gezeigten Rastern R1, R2 bilden alle parallel ausgerichteten ersten und zweiten Oberflächen 18, 19 eine Gruppe G. In Fig. 3a werden zu der Gruppe G gehörige Oberflächen 18, 19 dadurch veranschaulicht, dass diese als nicht schraffierte Flächen dargestellt sind. Die zu der Gruppe G gehörigen ersten und zweiten Oberflächen 18, 19 bilden einen Anteil von mehr als 50%, im gezeigten Beispiel von mehr als 80% der Gesamtzahl der ersten und zweiten reflektierenden Oberflächen 18, 19 der jeweiligen Raster R1, R2. Nicht zu der Gruppe G mit identischer Ausrichtung gehören lediglich am Rand des jeweiligen Rasters R1, R2 angeordnete, in Fig. 3a schraffiert dargestellte erste und zweite reflektierende Oberflächen 18, 19, die zur Umlenkung des Laserstrahls 7 dienen, wie weiter unten näher beschrieben wird.

Die in Fig. 2 bzw. in Fig. 3a gezeigte optische Verzögerungseinrichtung 16 ist derart ausgebildet, dass der Laserstrahl 7 in dem Zwischenraum 20 zwischen dem Eingang 21 und dem Ausgang 22 sowohl auf einem ersten Strahlweg S1 und in dem Zwischenraum 20 (ggf. zwischen einem weiteren Eingang und einem weiteren Ausgang) auch auf einem zweiten, vom ersten verschiedenen geometrischen Strahlweg S2 geführt wird. Zur Führung des Laserstrahls 7 entlang von zwei unterschiedlichen geometrischen Strahlwegen S1, S2 ist neben dem ggf. erforderlichen Vorsehen eines weiteren Eingangs und Ausgangs an der optischen Verzögerungseinrichtung 16, die z.B. durch Einbringen von weiteren Durchgangsöffnungen in den Trägerstrukturen 17a,b realisiert werden kann, eine geeignete Ausrichtung der seitlichen (schraffiert dargestellten) ersten und zweiten reflektierenden Oberflächen 18, 19 bezüglich der XY-Ebene sowie ein Versatz der ersten und zweiten Raster R1, R2 erforderlich.

Wie in Fig. 3a anhand von gestrichelten Linien angedeutet ist, wird bei dem ersten Strahlweg S1 der Laserstrahl 7 von einer ersten reflektierenden Oberfläche 18a des ersten Rasters R1 zu einer zweiten reflektierenden Oberfläche 19a des zweiten Rasters R2 reflektiert und von dieser zurück zu einer in X-Richtung benachbarten Oberfläche 18b des ersten Rasters R1 reflektiert. Eine solche Reflexion zwischen benachbarten ersten Oberflächen 18a,b des ersten Rasters R1 (und analog zwischen benachbarten zweiten Oberflächen 19a,b des zweiten Rasters R2) erfolgt bei dem ersten Strahlweg S1 typischer Weise zeilenweise (d.h. in X-Richtung) zwischen allen reflektierenden ersten und zweiten Oberflächen 18, 19, die der Gruppe G von identisch ausgerichteten reflektierenden Oberflächen 18, 19 angehören.

Wie in Fig. 3a angedeutet ist, verläuft der erste Strahlweg S1 am Rand des ersten bzw. des zweiten Rasters R1, R2 nicht zwischen benachbarten ersten bzw. zweiten reflektierenden Oberflächen 18, 19, sondern zwischen in dem quadratischen Raster nicht unmittelbar benachbarten ersten und zweiten reflektierenden Oberflächen 18, 19, die in unterschiedlichen Zeilen des Rasters R1, R2 angeordnet sind. Auf diese Weise kann das jeweilige Raster R1, R2 von dem Laserstrahl 7 entlang des ersten Strahlwegs S1 mäanderförmig durchlaufen werden, wie in **Fig. 3b** angedeutet ist.

Im Gegensatz zum ersten Strahlweg S1 durchläuft der Laserstrahl 7 das erste Raster R1 bzw. das zweite Raster R2 entlang des zweiten Strahlwegs S2 nicht zeilenweise in X-Richtung, sondern entlang einer zu dieser um 60° gedrehten Richtung U (vgl. Fig. 3b). Der zweite Strahlweg S2 verläuft ebenfalls mäanderförmig entlang der gegenüber dem jeweiligen Raster R1, R2 gedrehten Richtung U, d.h. nicht entlang der Zeilen und Spalten des jeweiligen Rasters R1, R2 wie dies beim ersten Strahlweg S1 der Fall ist. Der zweite Strahlweg S2 verläuft daher nicht nur an den Rändern des jeweiligen Rasters R1, R2 zwischen nicht benachbarten ersten und zweiten reflektierenden Oberflächen 18, 19, sondern auch zwischen denjenigen der ersten und zweiten reflektierenden Oberflächen 18, 19, die der Gruppe G angehören und somit gleich ausgerichtet sind.

Beispielhaft ist in Fig. 3a ein Teil des zweiten Strahlwegs S2 von einer ersten reflektierenden Oberfläche 18c des ersten Rasters R1 gezeigt, von welcher der Laserstrahl 7 entlang des zweiten Strahlwegs S2 zu derselben zweiten reflektierenden Oberflächen 19a geführt wird wie beim ersten Strahlweg S1. Der Laserstrahl 7 wird von dieser zweiten reflektierenden Oberfläche 19a entlang des zweiten Strahlwegs S2 zurück zu einer weiteren, nicht benachbarten ersten reflektierenden Oberfläche 18d reflektiert. Wie in Fig. 3b ersichtlich ist, werden für den zweiten mäanderförmigen Strahlweg S2 an den jeweiligen oberen und unteren Rändern der Raster R1, R2 zusätzlich zwei (in Fig. 3b nicht dargestellte) Zeilen mit ersten und zweiten reflektierenden Oberflächen 18, 19 benötigt, die typischer Weise nur von dem zweiten Strahlweg S2, aber nicht von dem ersten Strahlweg S1 durchlaufen werden. Ein Teil der reflektierenden Oberflächen der in Fig. 3b dargestellten drei Zeilen der jeweiligen Raster R1, R2 wird hingegen von dem Laserstrahl 7 in beiden Strahlwegen S1, S2 durchlaufen.

**Fig. 4a**,**b** zeigen einen Ausschnitt der übereinander dargestellten ersten und zweiten Raster R1, R2 von Fig. 3a,b mit einem ersten und zweiten Strahlweg S1, S2 (vgl. Fig. 4a) sowie mit einem dritten Strahlweg S3 (vgl. Fig. 4b). Der dritte Strahlweg S3 durchläuft die ersten und zweiten reflektierenden Oberflächen 18, 19 mäanderförmig entlang einer dritten Richtung V, die um 120° gegenüber der Richtung X des ersten Strahlwegs S1 und um 60° gegenüber der Richtung U des zweiten Strahlwegs S2 gedreht ist. Bei der in Fig. 4a dargestellten Anordnung können nicht alle der ersten und zweiten reflektierenden Oberflächen 18, 19 der untersten Zeile sowie der (in Fig. 4a nicht dargestellten) obersten Zeile der jeweiligen Raster R1, R2 für den zweiten Strahlweg S2 genutzt werden, so dass diese ggf. weggelassen oder für den dritten Strahlweg S3 genutzt werden können. Bei der in Fig. 4b dargestellten Anordnung wird hingegen die Hälfte der ersten und zweiten reflektierenden Oberflächen 18, 19 jeweils vom zweiten Strahlweg S2 bzw. vom dritten Strahlweg S3 durchlaufen, so dass diese zur Verlängerung des jeweiligen zweiten bzw. dritten Strahlwegs S2, S3 des Laserstrahls 7 beitragen.

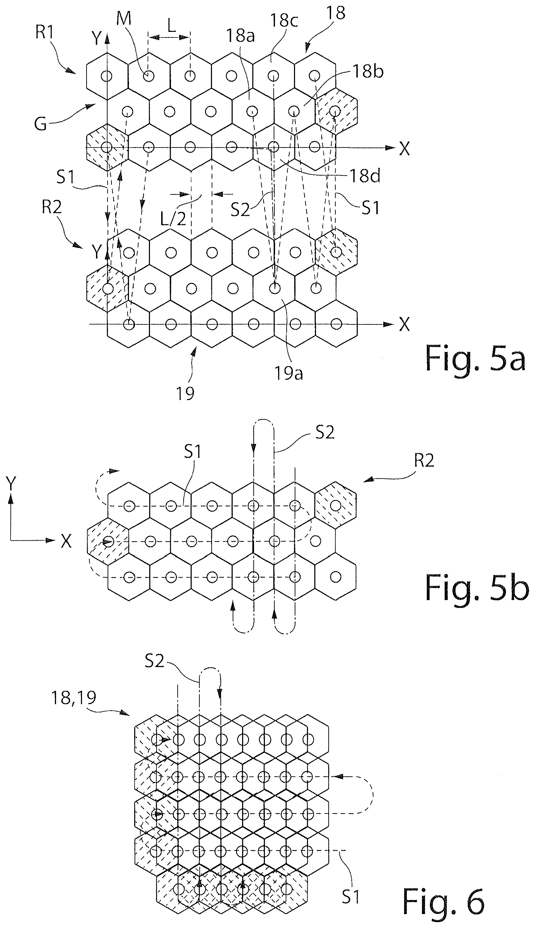

Die Ausrichtung der jeweiligen Richtungen X, U, V der mäanderförmigen Strahlwege S1, S2, S3 muss nicht zwingend unter 60° zueinander erfolgen, es ist in Abhängigkeit von der Geometrie der jeweiligen Raster R1, R2 beispielsweise auch möglich, die Richtungen X, U,V der mäanderförmigen Strahlwege S1, S2, S3 senkrecht zueinander zu wählen, wie dies nachfolgend anhand von zwei in **Fig. 5a****,b** gezeigten hexagonalen Rastern R1, R2 beschrieben wird.

Die beiden hexagonalen Raster R1, R2 von Fig. 5a,b sind analog zu den in Fig. 3a,b gezeigten quadratischen Raster R1, R2 um die Hälfte L / 2 des Abstands L zwischen den Mittelpunkten M benachbarter erster und zweiter reflektierender Oberflächen 18, 19 in X-Richtung verschoben. Wie weiter oben im Zusammenhang mit Fig. 3a,b beschrieben wurde, durchläuft der Laserstrahl 7 das erste und zweite Raster R1, R2 auf dem ersten Strahlweg S1 mäanderförmig entlang der X-Richtung, d.h. entlang der Zeilen der jeweiligen Raster R1, R2. Der zweite Strahlweg S2 verläuft entlang der ersten und zweiten reflektierenden Oberflächen 18, 19 um 90° gedreht, d.h. entlang der Y-Richtung, wie in Fig. 5b zu erkennen ist. Durch die in Fig. 5a,b gezeigte senkrechte Ausrichtung kann eine strikte Trennung der mäanderförmigen Strahlwege S1, S2 realisiert werden und so ein Übersprechen von einem Strahlweg S1 in den anderen Strahlweg S2 vermieden werden. Der Eingang 21 und der Ausgang 22 der Verzögerungseinrichtung 16 können in diesem Fall örtlich und in Strahlausbreitungsrichtung weit voneinander getrennt angeordnet werden, ohne dass zu diesem Zweck weitere optische Elemente in der Verzögerungseinrichtung 16 vorgesehen werden müssen.

Wie in Fig. 3a,b wird der Laserstrahl 7 auch in Fig. 5a,b entlang des ersten Strahlwegs S1 beim ersten Durchlauf von einer der ersten reflektierenden Oberflächen 18a zu einer der zweiten reflektierenden Oberflächen 19a reflektiert, die derselben Zeile des zweiten Rasters R2 angehört wie die erste reflektierende Oberfläche 18a. Der Laserstrahl 7 wird von der zweiten reflektierenden Oberfläche 19a zu einer in derselben Zeile angeordneten benachbarten ersten reflektierenden Oberfläche 18b des ersten Rasters R1 reflektiert. Wie bei den quadratischen Rastern R1, R2 von Fig. 3a,b wird auch bei den hexagonalen Rastern R1, R2 von Fig. 5a,b bei dem zweiten Durchlauf entlang des zweiten Strahlwegs S2 der Laserstrahl 7 von einer weiteren der ersten reflektierenden Oberflächen 18c zu derselben zweiten reflektierenden Oberfläche 19a des zweiten Rasters R2 und von dieser zurück zu einer weiteren, nicht benachbarten ersten reflektierenden Oberfläche 18d reflektiert. Sowohl bei dem in Fig. 3a,b als auch bei dem in Fig. 5a,b dargestellten Beispiel sind die nicht benachbarten ersten reflektierenden Oberflächen 18c, 18d in zwei Zeilen angeordnet, die oberhalb bzw. unterhalb derjenigen Zeile liegen, in der die zweite reflektierende Oberfläche 19a angeordnet ist, zu der bzw. von der die Reflexion des Laserstrahls 7 erfolgt.

Wie bei dem in Fig. 3a,b gezeigten Beispiel sind auch bei dem in Fig. 5a,b gezeigten Beispiel die ersten und zweiten reflektierenden Oberflächen 18, 19, die der Gruppe G mit identisch ausgerichteten ersten und zweiten reflektierenden Oberflächen 18, 19 angehören, nicht schraffiert dargestellt, während diejenigen reflektierenden Oberflächen 18, 19, die zur Zeichenebene bzw. zur XY-Ebene verkippt sind, schaffiert dargestellt sind. An den schraffiert dargestellten ersten und zweiten Oberflächen 18, 19 erfolgt eine Umlenkung bzw. Reflexion zwischen unterschiedlichen Zeilen der jeweiligen Raster R1, R2.

In Fig. 6 sind die ersten und zweiten reflektierenden Oberflächen 18, 19 eines unteren linken Teilbereichs der beiden hexagonalen Raster R1, R2 übereinander dargestellt. Wie in Fig. 6 gut zu erkennen ist, sind die ersten und zweiten Oberflächen 18, 19 entlang der seitlichen Ränder der beiden hexagonalen Raster R1, R2 gegenüber der XY-Ebene verkippt, um die mäanderförmige Umlenkung des jeweiligen Strahlwegs S1, S2 zu bewirken.

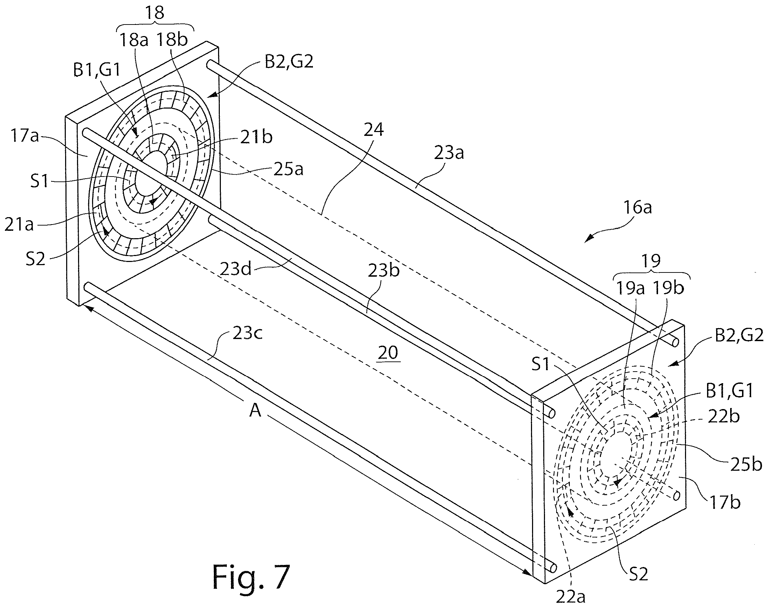

Fig. 7 zeigt schließlich eine optische Verzögerungseinrichtung 16a, welche sich von der in Fig. 2 gezeigten Verzögerungseinrichtung 16 im Wesentlichen dadurch unterscheidet, dass die ersten und zweiten reflektierenden Oberflächen 18, 19 nicht in einem ersten und zweiten Raster R1, R2, sondern in einem ersten und zweiten Ringbereich B1, B2 jeweils auf einem gemeinsamen Substrat 25a,b angeordnet sind. Der erste, innere und der zweite, äußere Ringbereich B1, B2 sind konzentrisch zueinander angeordnet. Die Mehrzahl von ersten reflektierenden Oberflächen 18 wird durch die Ringbereiche B1, B2 in eine erste Gruppe G1 von ersten reflektierenden Oberflächen 18a, die dem ersten Ringbereich B1 angehören, sowie in eine zweite Gruppe G2 von reflektierenden Oberflächen 18b unterteilt, die dem zweiten Ringbereich B2 angehören. Entsprechend werden die zweiten reflektierenden Oberflächen 19 in eine erste Gruppe G1 von zweiten reflektierenden Oberflächen 19a, die dem ersten Ringbereich B1 angehören, und in eine zweite Gruppe G2 von zweiten reflektierenden Oberflächen 19b unterteilt, die dem zweiten Ringbereich B2 angehören.

Die ersten und zweiten reflektierenden Oberflächen 18, 19 des ersten und zweiten Ringbereichs B1, B2 sind derart angeordnet und ausgerichtet, dass der Laserstahl 7 nur zwischen den ersten und zweiten reflektierenden Oberflächen 18a, 19a des ersten Ringbereichs B1 oder nur zwischen den ersten und zweiten reflektierenden Oberflächen 18a, 19a des zweiten Ringbereichs B2 hin- und her reflektiert wird. Bei dem in Fig. 7 gezeigten Beispiel wird somit keine der ersten und zweiten reflektierenden Oberflächen 18, 19 der beiden Ringbereiche B1, B2 auf mehr als einem Strahlweg S1, S2 von dem Laserstrahl 7 durchlaufen. Die reflektierenden Oberflächen 18, 19 sind bei dem in Fig. 7 gezeigten Beispiel in Form von Spiegel-Facetten auf dem jeweiligen Substrat 25a,b aus Kupfer gebildet. Die reflektierenden Oberflächen 18, 19 bilden Kreis-Sektoren der jeweiligen Ringbereiche B1, B2 und können wie oben beschrieben beispielsweise durch Diamantbearbeiten des Substrats 25a,b hergestellt werden.

Wie in Fig. 7 zu erkennen ist, sind an der ersten Trägerstruktur 17a zwei Eingänge 21a,b in Form von Durchgangsöffnungen ausgebildet. Analog sind an der zweiten Trägerstruktur 17b zwei Ausgänge 22a,b in Form von zwei Durchgangsöffnungen ausgebildet. Der erste Eingang 21a und der erste Ausgang 22a ersetzen eine der Spiegel-Facetten der reflektierenden Oberflächen 18a, 19a des ersten Ringbereichs B1. Entsprechend ersetzen der zweite Eingang 21b und der zweite Ausgang 22b eine der Spiegel-Facetten der reflektierenden Oberflächen 18b, 19b des zweiten Ringbereichs B2. Der erste bzw. der zweite Strahlweg S1 bzw. S2 verlaufen in diesem Fall zwischen dem ersten bzw. zweiten Eingang 21a bzw. 21b und dem ersten bzw. zweiten Ausgang 22a bzw. 22b. Dies ist insbesondere günstig, wenn eine Abschirmung 24 in Form eines Hohlzylinders in dem Zwischenraum 20 angebracht ist, welche den ersten Ringbereich B1 im Wesentlichen lichtdicht von dem zweiten Ringbereich B2 trennt, wie in Fig. 7 gestrichelt angedeutet ist. Alternativ kann ggf. lediglich ein einziger Eingang zum Einkoppeln der beiden Strahlwege S1, S2 in den Zwischenraum 20 der optischen Verzögerungseinrichtung 16a und ein einziger Ausgang zum Auskoppeln der beiden Strahlwege S1, S2 aus dem Zwischenraum 20 der optischen Verzögerungseinrichtung 16a vorgesehen sein.

Im gezeigten Beispiel durchläuft der Laserstrahl 7 die reflektierenden ersten und zweiten Oberflächen 18a, 19a des ersten Ringbereichs B1 entlang des ersten Strahlwegs S1 entgegen des Uhrzeigersinns und die ersten und zweiten reflektierenden Oberflächen 18b, 19b des zweiten Strahlwegs S2 im Uhrzeigersinn. Es versteht sich, dass die reflektierenden Oberflächen 18a, 19a, 18b, 19b des ersten und zweiten Ringbereichs B1, B2 entlang des ersten und zweiten Strahlwegs S1, S2 von dem Laserstrahl 7 alternativ auch gleichläufig durchlaufen werden können. Die Position der jeweiligen ersten bzw. zweiten reflektierenden Oberflächen 18a, 19a, 18b, 19b in Umfangsrichtung, an welcher der Laserstrahl 7 eingekoppelt bzw. ausgekoppelt wird, kann für den ersten und zweiten Strahlweg S1, S2 in Umfangsrichtung übereinstimmen. Alternativ können die Positionen in Umfangsrichtung, an denen das Einkoppeln und das Auskoppeln erfolgt, für den ersten und zweiten Strahlweg S1, S2 unterschiedlich gewählt werden, um auf diese Weise die beiden Strahlwege S1, S2 geometrisch noch einfacher trennen zu können, wie in Fig. 7 dargestellt ist.

Die in Fig. 7 gezeigte optische Verzögerungseinrichtung 16a kann insbesondere in einen der optischen Verstärker 4a-c von Fig. 1a,b integriert werden, beispielsweise in den ersten optischen Verstärker 4a (vgl. Fig. 1a). In diesem Fall ist in dem Zwischenraum 20 ein typischer Weise gasförmiges Verstärkungsmedium, im gezeigten Beispiel in Form von CO₂-Gas, eingebracht. Es versteht sich, dass an Stelle von ersten und zweiten reflektierenden Oberflächen 18, 19 in Form von Einzelspiegeln die ersten und zweiten reflektierenden Oberflächen 18, 19 auch bei der in Fig. 7 gezeigten Verzögerungseinrichtung 16a in Form von Spiegel-Facetten ausgebildet sein können.

Bei den hier beschriebenen Beispielen sind typischer Weise zumindest die ersten reflektierenden Oberflächen 18 oder zumindest die zweiten reflektierenden Oberflächen 19 konkav gekrümmt, um bei der Reflexion an einer jeweils gegenüber liegenden zweiten bzw. ersten reflektierenden Oberfläche 19, 18 den Laserstrahl 7 auf eine weitere reflektierende erste bzw. zweite reflektierende Oberfläche 18, 19 abzubilden. Bei dem in Fig. 2 beschriebenen Beispiel, bei dem die ersten und zweiten reflektierenden Oberflächen 18, 19 jeweils in einem Raster R1, R2 angeordnet sind, sind typischer Weise sowohl die ersten als auch die zweiten reflektierenden Oberflächen 18, 19 konkav gekrümmt. Bei dem in Fig. 7 gezeigten Beispiel sind hingegen in der Regel die zweiten reflektierenden Oberflächen 19 konvex gekrümmt. Es versteht sich, dass es - abgesehen von der Krümmung - keinen grundsätzlichen Unterschied zwischen den ersten reflektierenden Oberflächen 18 und den zweiten reflektierenden Oberflächen 19 gibt.

An Stelle der Anbringung der ersten und zweiten reflektierenden Oberflächen 18, 19 auf den planen Oberflächen von Trägerstrukturen 17a,b ist es alternativ ggf. auch möglich, die Trägerstrukturen 17a,b selbst mit einer konkaven oder ggf. konvexen Krümmung zu versehen. In der Regel ist es für die mehrfache Abbildung bei der hier beschriebenen Anwendung jedoch erforderlich, dass die ersten und zweiten reflektierenden Oberflächen 18, 19 eine eigene Krümmung aufweisen, die größer ist als eine ggf. vorhandene Krümmung der jeweiligen Trägerstrukturen 17a,b, um auf diese Weise den Strahldurchmesser des Laserstrahls 7 bei der Verlängerung des Strahlwegs S1, S2 beibehalten zu können.

Auf die weiter oben beschriebene Weise kann ein Laserstrahl ein- und dieselbe Verzögerungseinrichtung 16, 16a in mindestens einem ersten und einem zweiten Durchlauf entlang von unterschiedlichen geometrischen Strahlwegen S1, S2, ... durchlaufen, wodurch der für die Verlängerung des Strahlwegs S1, S2, ... benötigte Bauraum der optischen Verzögerungseinrichtung 16, 16a vergleichsweise klein ist. Die Ausrichtung der ersten und zweiten reflektierenden Oberflächen 18, 19 in der optischen Verzögerungseinrichtung 16, 16a ist typischer Weise fest vorgegeben, d.h. es ist in der Regel nicht möglich, die Ausrichtung der ersten und zweiten reflektierenden Oberflächen 18, 19 während des Betriebs der optischen Verzögerungseinrichtung 16, 16a zu verändern.

## Patentansprüche

1. Verfahren zum Verlängern eines Strahlwegs (S1, S2, ...) eines Lichtstrahls (7), insbesondere eines Laserstrahls, umfassend:
Einkoppeln des Lichtstrahls (7) in einen Zwischenraum (20) zwischen einer Mehrzahl von ersten reflektierenden Oberflächen (18) und einer Mehrzahl von den ersten reflektierenden Oberflächen (18) zugewandten zweiten reflektierenden Oberflächen (19),
mehrfaches Reflektieren des Lichtstrahls (7) zwischen den ersten reflektierenden Oberflächen (18) und den zweiten reflektierenden Oberflächen (19) zum Verlängern des Strahlwegs (S1, S2) des Lichtstrahls (7), sowie Auskoppeln des Lichtstrahls (7) aus dem Zwischenraum (20),
**dadurch gekennzeichnet,**
**dass** der Lichtstrahl (7) die Schritte des Einkoppelns, des mehrmaligen Reflektierens und des Auskoppelns mindestens ein erstes und ein zweites Mal durchläuft, wobei der Lichtstrahl (7) beim ersten Durchlauf einen anderen Strahlweg (S1, S2) in dem Zwischenraum (20) zurücklegt als beim zweiten Durchlauf.

2. Verfahren nach Anspruch 1, bei dem der Lichtstrahl (7) an mindestens einer der ersten oder der zweiten reflektierenden Oberflächen (18, 19) sowohl beim ersten Durchlauf als auch beim zweiten Durchlauf reflektiert wird.

3. Verfahren nach Anspruch 1 oder 2, bei dem mindestens eine der ersten reflektierenden Oberflächen (18a) bei der Reflexion des Lichtstrahls (7) an einer der zweiten reflektierenden Oberflächen (19a) auf eine weitere erste reflektierende Oberfläche (18b) abgebildet wird.

4. Verfahren nach einem der vorhergehenden Ansprüche, bei dem die Mehrzahl von ersten reflektierenden Oberflächen (18) und die Mehrzahl von zweiten reflektierenden Oberflächen (19) in einem ersten Raster (R1) und in einem zweiten Raster (R2) angeordnet sind, die von dem Lichtstrahl (7) bevorzugt mäanderförmig durchlaufen werden.

5. Verfahren nach Anspruch 4, bei dem eine Richtung (X), entlang derer der Lichtstrahl (7) die ersten und zweiten reflektierenden Oberflächen (18, 19) des ersten und zweiten Rasters (R1, R2) bei dem ersten Durchlauf mäanderförmig durchläuft, sich von einer Richtung (U, V) unterscheidet, entlang derer der Lichtstrahl (7) die ersten und zweiten reflektierenden Oberflächen (18, 19) des ersten und zweiten Rasters (R1, R2) bei dem zweiten Durchlauf mäanderförmig durchläuft.

6. Verfahren nach einem der vorhergehenden Ansprüche, bei dem bei dem ersten Durchlauf der Lichtstrahl (7) von einer der ersten reflektierenden Oberflächen (18a) zu einer der zweiten reflektierenden Oberflächen (19a) und von dieser zurück zu einer weiteren, benachbarten ersten reflektierenden Oberfläche (18b) reflektiert wird, und wobei bei dem zweiten Durchlauf der Lichtstrahl (7) von einer der ersten reflektierenden Oberflächen (18c) zu derselben zweiten reflektierenden Oberfläche (19a) und von dieser zurück zu einer weiteren, nicht benachbarten ersten reflektierenden Oberfläche (18d) reflektiert wird.

7. Optische Verzögerungseinrichtung (16, 16a) zum Verlängern eines Strahlwegs (S1, S2, ...) eines Lichtstrahls (7), insbesondere eines Laserstrahls, umfassend:
eine Mehrzahl von ersten reflektierenden Oberflächen (18),
eine Mehrzahl von zweiten reflektierenden Oberflächen (19), die den ersten reflektierenden Oberflächen (18) zugewandt sind,
einen ersten Eingang (21a) zum Einkoppeln des Lichtstrahls (7) in einen zwischen den ersten und zweiten reflektierenden Oberflächen (18, 19) gebildeten Zwischenraum (20),
einen ersten Ausgang (22a) zum Auskoppeln des Lichtstrahls (7) aus dem Zwischenraum (20) nach dem Verlängern des Strahlwegs (S1, S2, ...) des Lichtstrahls (7) durch mehrfache Reflexion an den ersten reflektierenden Oberflächen (18) und an den zweiten reflektierenden Oberflächen (19),
**dadurch gekennzeichnet,**
**dass** die optische Verzögerungseinrichtung (16, 16a) einen zweiten, vom ersten verschiedenen Eingang (21b) und einen zweiten, vom ersten verschiedenen Ausgang (22b) aufweist, und dass die optische Verzögerungseinrichtung (16, 16a) ausgebildet ist, den Lichtstrahl (7) zwischen dem ersten Eingang (21a) und dem ersten Ausgang (22a) auf einem ersten Strahlweg (S1) und den Lichtstrahl (7) zwischen dem zweiten Eingang (21b) und dem zweiten Ausgang (22b) auf einem zweiten, vom ersten unterschiedlichen Strahlweg (S2) durch den Zwischenraum (20) zwischen den ersten und zweiten reflektierenden Oberflächen (18, 19) zu führen, und wobei die optische Verzögerungseinrichtung (16, 18, 19) ausgebildet ist, den Lichtstrahl (7) nach dem Durchlaufen des Zwischenraums (20) auf dem ersten Strahlweg (S1) vom ersten Ausgang (22a) zum zweiten Eingang (21b) umzulenken, um den Zwischenraum (20) auf dem zweiten Strahlweg (S2) erneut zu durchlaufen, wobei bevorzugt die Mehrzahl von ersten reflektierenden Oberflächen (18) konkav gekrümmt ist.

8. Verzögerungseinrichtung nach Anspruch 7, bei der eine Gruppe (G) von ersten und zweiten reflektierenden Oberflächen (18, 19), deren Anzahl bei mehr als 50 %, bevorzugt bei mehr als 80 % der Gesamtzahl der reflektierenden ersten und zweiten Oberflächen (18, 19) liegt, eine identische Normalen-Richtung (Z) aufweist.

9. Verzögerungseinrichtung nach Anspruch 7 oder 8, bei der die Mehrzahl von ersten reflektierenden Oberflächen (18) und die Mehrzahl von zweiten reflektierenden Oberflächen (19) in einem ersten Raster (R1) und in einem zweiten Raster (R2) angeordnet sind.

10. Verzögerungseinrichtung nach Anspruch 9, bei der das erste Raster (R1) und das zweite Raster (R2) parallel ausgerichtet und zueinander versetzt angeordnet sind, wobei der Versatz bevorzugt einen ganzzahligen Bruchteil, insbesondere die Hälfte (L / 2), eines Abstandes (L) zwischen den Mittelpunkten (M) benachbarter reflektierender Oberflächen (18, 19) des ersten und des zweiten Rasters (R1, R2) beträgt.

11. Verzögerungseinrichtung nach einem der Ansprüche 9 oder 10, welche ausgebildet ist, den Lichtstrahl (7) auf dem ersten Strahlweg (S1) über die ersten und zweiten reflektierenden Oberflächen (18, 19) des ersten und zweiten Rasters (R1, R2) mäanderförmig entlang einer ersten Richtung (X) zu führen, und welche ausgebildet ist, den Lichtstrahl (7) auf dem zweiten Strahlweg (S2) über die ersten und zweiten reflektierenden Oberflächen (18, 19) des ersten und zweiten Rasters (R1, R2) mäanderförmig entlang einer zweiten, von der ersten verschiedenen Richtung (U) zu führen.

12. Verzögerungseinrichtung nach Anspruch 7 oder 8, bei welcher die Mehrzahl von ersten reflektierenden Oberflächen (18) eine erste Gruppe (G1) von ersten reflektierenden Oberflächen (18a) und eine zweite Gruppe (G2) von ersten reflektierenden Oberflächen (18b) aufweist, und bei der die Mehrzahl von zweiten reflektierenden Oberflächen (19) eine erste Gruppe (G1) von zweiten reflektierenden Oberflächen (19a) und eine zweite Gruppe (G2) von zweiten reflektierenden Oberflächen (19b) aufweist, wobei
die reflektierenden ersten und zweiten Oberflächen (18a, 19a) der ersten Gruppe (G1) und die reflektierenden ersten und zweiten Oberflächen (18b, 19b) der zweiten Gruppe (G2) derart angeordnet und ausgerichtet sind, dass der Lichtstrahl (7) entlang eines ersten Strahlwegs (S1) nur zwischen reflektierenden ersten und zweiten Oberflächen (18a, 19a) der ersten Gruppe (G1) verläuft und der Lichtstrahl (7) entlang eines zweiten Strahlwegs (S2) nur zwischen reflektierenden ersten und zweiten Oberflächen (18b, 19b) der zweiten Gruppe (G2) verläuft, wobei bevorzugt die ersten und zweiten reflektierenden Oberflächen (18a, 19a) der ersten Gruppe (G1) in einem ersten, inneren Ringbereich (B1) und die ersten und zweiten reflektierenden Oberflächen (18b, 19b) der zweiten Gruppe (G2) in einem zweiten, äußeren Ringbereich (B2) angeordnet sind.

13. Verzögerungseinrichtung nach Anspruch 12, bei welcher zwischen der ersten Gruppe (G1) von ersten und zweiten reflektierenden Oberflächen (18a, 19b) und der zweiten Gruppe (G2) von reflektierenden ersten und zweiten Oberflächen (18b, 19b) eine Abschirmung (24), insbesondere in Form eines Hohlzylinders, zur Verhinderung des Übertritts von Strahlung von dem ersten Strahlweg (S1) in den zweiten Strahlweg (S2) oder umgekehrt angeordnet ist.

14. Verzögerungseinrichtung nach einem der Ansprüche 7 bis 13, welche ausgebildet ist, mindestens eine der reflektierenden ersten Oberflächen (18a) bei der Reflexion des Lichtstrahls (7) an einer der reflektierenden zweiten Oberflächen (19a) auf eine weitere reflektierende erste Oberfläche (18b) abzubilden.

15. Verzögerungseinrichtung nach einem der Ansprüche 7 bis 14, bei welcher die Mehrzahl von ersten reflektierenden Oberflächen (18) an einer ersten Trägerstruktur (17a) angebracht ist und bei welcher die Mehrzahl von zweiten reflektierenden Oberflächen (19) an einer zweiten Trägerstruktur (17b) angebracht ist, wobei die Verzögerungseinrichtung bevorzugt Abstandshalter (23a-d) zum Verbinden der Trägerstrukturen (17a,b) unter Einhaltung eines vorgegebenen Abstands (A) voneinander aufweist.

16. Treiberlaseranordnung (12) für eine EUV-Lichtquelle (1), umfassend:
mindestens eine optische Verzögerungseinrichtung (16, 16a) nach einem der Ansprüche 7 bis 15.

## Claims

1. A method for elongating a beam path (S1, S2, ...) of a light beam (7), in particular of a laser beam, comprising:
coupling the light beam (7) into an interspace (20) between a plurality of first reflective surfaces (18) and a plurality of second reflective surfaces (19) facing the first reflective surfaces (18),
multiply reflecting the light beam (7) between the first reflective surfaces (18) and the second reflective surfaces (19) in order to elongate the beam path (S1, S2) of the light beam (7), and
coupling out the light beam (7) from the interspace (20),
**characterized**
**in that** the light beam (7) undergoes the steps of coupling in, repeated reflecting and coupling out at least a first and a second time, wherein the light beam (7) traverses a different beam path (S1, S2) in the interspace (20) during the first pass in comparison with during the second pass.

2. The method as claimed in claim 1, wherein the light beam (7) is reflected at at least one of the first or of the second reflective surfaces (18, 19) both during the first pass and during the second pass.

3. The method as claimed in claim 1 or 2, wherein at least one of the first reflective surfaces (18a) is imaged onto a further first reflective surface (18b) during the reflection of the light beam (7) at one of the second reflective surfaces (19a).

4. The method as claimed in any of the preceding claims, wherein the plurality of first reflective surfaces (18) and the plurality of second reflective surfaces (19) are arranged in a first grid (R1) and in a second grid (R2), in which the light beam (7) passes preferably in a meandering fashion.

5. The method as claimed in claim 4, wherein a direction (X) along which the light beam (7) passes through the first and second reflective surfaces (18, 19) of the first and second grids (R1, R2) in a meandering fashion during the first pass differs from a direction (U, V) along which the light beam (7) passes through the first and second reflective surfaces (18, 19) of the first and second grids (R1, R2) in a meandering fashion during the second pass.

6. The method as claimed in any of the preceding claims, wherein, during the first pass, the light beam (7) is reflected from one of the first reflective surfaces (18a) to one of the second reflective surfaces (19a) and back from the latter to a further, adjacent first reflective surface (18b), and wherein, during the second pass, the light beam (7) is reflected from one of the first reflective surfaces (18c) to the same second reflective surface (19a) and back from the latter to a further, non-adjacent first reflective surface (18d).

7. An optical delay device (16, 16a) for elongating a beam path (S1, S2, ...) of a light beam (7), in particular of a laser beam, comprising:
a plurality of first reflective surfaces (18),
a plurality of second reflective surfaces (19) facing the first reflective surfaces (18),
a first input (21a) for coupling the light beam (7) into an interspace (20) formed between the first and second reflective surfaces (18, 19),
a first output (22, 22a, 22b) for coupling out the light beam (7) from the interspace (20) after the elongating of the beam path (S1, S2, ...) of the light beam (7) by multiple reflection at the first reflective surfaces (18) and at the second reflective surfaces (19),
**characterized**
**in that** the optical delay device (16, 16a) comprises a second input (21b), different from the first, and a second output (22b), different from the first, and in that
the optical delay device (16, 16a) is configured to guide the light beam (7) between the first input (21a) and the first output (22a) on a first beam path (S1) and to guide the light beam (7) between the second input (21b) and the second output (22b) on a second beam path (S2), different from the first, through the interspace (20) between the first and second reflective surfaces (18, 19), and wherein
the optical delay device (16, 18, 19) is configured to deflect the light beam (7), after passing through the interspace (20) on the first beam path (S1), from the first outlet (22a) to the second inlet (21b) in order to pass through the interspace (20) once again on the second beam path (S2), wherein preferably the plurality of first reflective surfaces (18) is concavely curved.

8. The delay device as claimed in claim 7, wherein a group (G) of first and second reflective surfaces (18, 19), the number of which is more than 50%, preferably more than 80%, of the total number of reflective first and second surfaces (18, 19), has an identical normal direction (Z).

9. The delay device as claimed in claim 7 or 8, wherein the plurality of first reflective surfaces (18) and the plurality of second reflective surfaces (19) are arranged in a first grid (R1) and in a second grid (R2).

10. The delay device as claimed in claim 9, wherein the first grid (R1) and the second grid (R2) are aligned parallel and arranged offset with respect to one another, wherein the offset is preferably an integer fraction, in particular half (L / 2), of a distance (L) between the center points (M) of adjacent reflective surfaces (18, 19) of the first and second grids (R1, R2).

11. The delay device as claimed in either of claims 9 and 10, which is configured to guide the light beam (7) on the first beam path (S1) via the first and second reflective surfaces (18, 19) of the first and second grids (R1, R2) in a meandering fashion along a first direction (X), and which is configured to guide the light beam (7) on the second beam path (S2) via the first and second reflective surfaces (18, 19) of the first and second grids (R1, R2) in a meandering fashion along a second direction (U), which is different than the first direction.

12. The delay device as claimed in claim 7 or 8, wherein the plurality of first reflective surfaces (18) has a first group (G1) of first reflective surfaces (18a) and a second group (G2) of first reflective surfaces (18b), and wherein the plurality of second reflective surfaces (19) has a first group (G1) of second reflective surfaces (19a) and a second group (G2) of second reflective surfaces (19b), wherein
the reflective first and second surfaces (18a, 19a) of the first group (G1) and the reflective first and second surfaces (18b, 19b) of the second group (G2) are arranged and aligned in such a way that the light beam (7) runs along a first beam path (S1) only between reflective first and second surfaces (18a, 19a) of the first group (G1) and the light beam (7) runs along a second beam path (S2) only between reflective first and second surfaces (18b, 19b) of the second group (G2), wherein preferably the first and second reflective surfaces (18a, 19a) of the first group (G1) are arranged in a first, inner ring region (B1) and the first and second reflective surfaces (18b, 19b) of the second group (G2) are arranged in a second, outer ring region (B2).

13. The delay device as claimed in claim 12, wherein a shield (24), in particular in the form of a hollow cylinder, for preventing radiation from crossing from the first beam path (S1) into the second beam path (S2), or vice versa, is arranged between the first group (G1) of first and second reflective surfaces (18a, 19a) and the second group (G2) of reflective first and second surfaces (18b, 19b).

14. The delay device as claimed in any of claims 7 to 13, which is configured to image at least one of the reflective first surfaces (18a) onto a further reflective first surface (18b) during the reflection of the light beam (7) at one of the reflective second surfaces (19a).

15. The delay device as claimed in any of claims 7 to 14, wherein the plurality of first reflective surfaces (18) is applied on a first carrier structure (17a), and wherein the plurality of second reflective surfaces (19) is applied on a second carrier structure (17b), wherein the delay device preferably comprises spacers (23a-d) for connecting the carrier structures (17a,b) whilst maintaining a predefined distance (A) from one another.

16. A driver laser arrangement (12) for an EUV light source (1), comprising:
at least one optical delay device (16, 16a) as claimed in any of claims 7 to 15.

## Revendications

1. Procédé d'allongement d'un trajet de faisceau (S1, S2, ...) d'un faisceau lumineux (7), en particulier d'un faisceau laser, le procédé comprenant les étapes suivantes :
injecter par couplage le faisceau lumineux (7) dans un espace intermédiaire (20) ménagé entre une pluralité de premières surfaces réfléchissantes (18) et une pluralité de deuxièmes surfaces réfléchissantes (19) dirigées vers les premières surfaces réfléchissantes (18),
faire réfléchir plusieurs fois le faisceau lumineux (7) entre les premières surfaces réfléchissantes (18) et les deuxièmes surfaces réfléchissantes (19) pour allonger le trajet (S1, S2) du faisceau lumineux (7),
faire sortir par couplage le faisceau lumineux (7) de l'espace intermédiaire (20),
**caractérisé en ce que**
le faisceau lumineux (7) passe par les étapes d'injection par couplage, de réflexions multiples et de sortie par couplage au moins une première et une deuxième fois, le faisceau lumineux (7) parcourant dans l'espace intermédiaire (20) un trajet de faisceau (S1, S2) pendant le premier passage différent de celui pendant le deuxième passage.

2. Procédé selon la revendication 1, dans lequel le faisceau lumineux (7) est réfléchi par l'une au moins des première ou deuxième surfaces réfléchissantes (18, 19) aussi bien pendant le premier passage que pendant le deuxième passage.

3. Procédé selon la revendication 1 ou 2, dans lequel au moins une des premières surfaces réfléchissantes (18a) est reproduite sur une autre première surface réfléchissante (18b) lorsque le faisceau lumineux (7) est réfléchi par l'une des deuxièmes surfaces réfléchissantes (19a) .

4. Procédé selon l'une des revendications précédentes, dans lequel la pluralité de premières surfaces réfléchissantes (18) et la pluralité de deuxièmes surfaces réfléchissantes (19) sont disposées suivant une première trame (R1) et une deuxième trame (R2) qui sont balayées de préférence en forme de méandres par le faisceau lumineux (7).

5. Procédé selon la revendication 4, dans lequel une direction (X), le long de laquelle le faisceau lumineux (7) balaye en forme de méandres les premières et deuxièmes surfaces réfléchissantes (18, 19) des première et deuxième trames (R1, R2) lors du premier passage, diffère d'une direction (U, V) le long de laquelle le faisceau lumineux (7) balaye en forme de méandres les premières et deuxièmes surfaces réfléchissantes (18, 19) des première et deuxième trames (R1, R2) lors du deuxième passage.

6. Procédé selon l'une des revendications précédentes, dans lequel lors du premier passage le faisceau lumineux (7) est réfléchi par l'une des premières surfaces réfléchissantes (18a) en direction de l'une des deuxièmes surfaces réfléchissantes (19a) et par celle-ci de retour en direction d'une autre première surface réfléchissante adjacente (18b), et lors du deuxième passage le faisceau lumineux (7) étant réfléchi par l'une des premières surfaces réfléchissantes (18c) en direction de la même deuxième surface réfléchissante (19a) et par celle-ci de retour en direction d'une autre première surface réfléchissante non adjacente (18d).

7. Dispositif à retard optique (16, 16a) destiné à allonger un trajet (S1, S2, ...) d'un faisceau lumineux (7), en particulier d'un faisceau laser, et comprenant:
une pluralité de premières surfaces réfléchissantes (18), une pluralité de deuxièmes surfaces réfléchissantes (19) dirigées vers les premières surfaces réfléchissantes (18),
une première entrée (21a) destinée à injecter par couplage le faisceau lumineux (7) dans un espace intermédiaire (20) ménagé entre les premières et deuxièmes surfaces réfléchissantes (18, 19),
une première sortie (22a) destinée à faire sortir par couplage le faisceau lumineux (7) de l'espace intermédiaire (20) après que le trajet (S1, S2, ...) du faisceau lumineux (7) a été allongé par de multiples réflexions sur les premières surfaces réfléchissantes (18) et sur les deuxièmes surfaces réfléchissantes (19), **caractérisé en ce que**
le dispositif à retard optique (16, 16a) comporte une deuxième entrée (21b) différente de la première et une deuxième sortie (22b) différente de la première, et **en ce que** le dispositif à retard optique (16, 16a) est conçu pour guider le faisceau lumineux (7) sur un premier trajet de faisceau (S1) entre la première entrée (21a) et la première sortie (22a) et pour guider le faisceau lumineux (7) sur un deuxième trajet de faisceau (S2), différent du premier, entre la deuxième entrée (21b) et la deuxième sortie (22b) à travers l'espace intermédiaire (20) ménagé entre les premières et deuxièmes surfaces réfléchissantes (18, 19), et le dispositif à retard optique (16, 18, 19) étant conçu pour dévier le faisceau lumineux (7) de la première sortie (22a) à la deuxième entrée (21b) après avoir traversé l'espace intermédiaire (20) sur le premier trajet de faisceau (S1) afin de traverser à nouveau l'espace intermédiaire (20) sur le deuxième trajet de faisceau (S2), de préférence la pluralité de premières surfaces réfléchissantes (18) étant incurvées de manière concave.

8. Dispositif à retard selon la revendication 7, dans lequel un groupe (G) de premières et deuxièmes surfaces réfléchissantes (18, 19), dont le nombre est supérieur à 50 %, de préférence supérieur à 80 %, du nombre total de premières et deuxièmes surfaces réfléchissantes (18, 19), a une direction normale identique (Z).

9. Dispositif à retard selon la revendication 7 ou 8, dans lequel la pluralité de premières surfaces réfléchissantes (18) et la pluralité de deuxièmes surfaces réfléchissantes (19) sont disposées suivant une première trame (R1) et une deuxième trame (R2).

10. Dispositif à retard selon la revendication 9, dans lequel la première trame (R1) et la deuxième trame (R2) sont orientées parallèlement et décalées l'une de l'autre, le décalage étant de préférence une fraction entière, en particulier la moitié (L/2), d'une distance (L) entre les centres (M) de surfaces réfléchissantes adjacentes (18, 19) des première et deuxième trames (R1, R2).

11. Dispositif à retard selon l'une des revendications 9 et 10, qui est conçu pour guider en forme de méandres le faisceau lumineux (7) sur le premier trajet de faisceau (S1) sur les premières et deuxièmes surfaces réfléchissantes (18, 19) des première et deuxième trames (R1, R2) suivant une première direction (X) et pour guider en forme de méandre le faisceau lumineux (7) sur le deuxième trajet de faisceau (S2) sur les premières et deuxièmes surfaces réfléchissantes (18, 19) des première et deuxième trames (R1, R2) suivant une deuxième direction (U) différente de la première.

12. Dispositif à retard selon la revendication 7 ou 8, dans lequel la pluralité de premières surfaces réfléchissantes (18) comporte un premier groupe (G1) de premières surfaces réfléchissantes (18a) et un deuxième groupe (G2) de premières surfaces réfléchissantes (18b), et dans lequel la pluralité de deuxièmes surfaces réfléchissantes (19) comporte un premier groupe (G1) de deuxièmes surfaces réfléchissantes (19a) et un deuxième groupe (G2) de deuxièmes surfaces réfléchissantes (19b), les premières et deuxièmes surfaces réfléchissantes (18a, 19a) du premier groupe (G1) et les premières et deuxièmes surfaces réfléchissantes (18b, 19b) du deuxième groupe (G2) étant disposées et orientées de telle sorte que le faisceau lumineux (7) s'étende le long d'un premier trajet de faisceau (S1) uniquement entre des premières et deuxièmes surfaces réfléchissantes (18a, 19a) du premier groupe (G1) et le faisceau lumineux (7) s'étende le long d'un deuxième trajet de faisceau (S2) uniquement entre des premières et deuxièmes surfaces réfléchissantes (18b, 19b) du deuxième groupe (G2), de préférence les premières et deuxièmes surfaces réfléchissantes (18a, 19a) du premier groupe (G1) étant disposées dans une première région annulaire intérieure (B1) et les premières et deuxièmes surfaces réfléchissantes (18b, 19b) du deuxième groupe (G2) étant disposées dans une deuxième région annulaire extérieure (B2).

13. Dispositif à retard selon la revendication 12, dans lequel un écran (24), se présentant en particulier sous la forme d'un cylindre creux, est disposé entre le premier groupe (G1) de premières et deuxièmes surfaces réfléchissantes (18a, 19b) et le deuxième groupe (G2) de premières et deuxièmes surfaces réfléchissantes (18b, 19b) pour empêcher le passage de rayonnement du premier trajet de faisceau (S1) dans le deuxième trajet de faisceau (S2) ou inversement.

14. Dispositif à retard selon l'une des revendications 7 à 13, qui est conçu pour reproduire au moins une des premières surfaces réfléchissantes (18a) sur une autre première surface réfléchissante (18b) lorsque le faisceau lumineux (7) est réfléchi sur l'une des deuxièmes surfaces réfléchissantes (19a).

15. Dispositif à retard selon l'une des revendications 7 à 14, dans lequel la pluralité de premières surfaces réfléchissantes (18) est fixée à une première structure de support (17a) et dans lequel la pluralité de deuxièmes surfaces réfléchissantes (19) est fixée à une deuxième structure de support (17b), le dispositif à retard comportant de préférence des éléments d'espacement (23ad) pour relier les structures de support (17a,b) tout en ménageant une distance prédéterminée (A) entre elles.

16. Ensemble laser-excitateur (12) destiné à une source lumineuse EUV (1) et comprenant :
au moins un dispositif à retard optique (16, 16a) selon l'une des revendications 7 à 15.
